(19) Europäisches Patentamt
European Patent Office
Office européen des brevets

(11) **EP 4 648 455 A1**

(12) **EUROPEAN PATENT APPLICATION**
published in accordance with Art. 153(4) EPC

(43) Date of publication:
**12.11.2025 Bulletin 2025/46**

(21) Application number: **24741187.9**

(22) Date of filing: **08.01.2024**

(51) International Patent Classification (IPC):
**H04W 12/106** (2021.01)

(52) Cooperative Patent Classification (CPC):
**H04L 1/00; H04L 9/32; H04W 8/24; H04W 12/106**

(86) International application number:
**PCT/CN2024/071058**

(87) International publication number:
**WO 2024/149188 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.01.2023 CN 202310027172**

(71) Applicant: **Huawei Technologies Co., Ltd.
Shenzhen, Guangdong 518129 (CN)**

(72) Inventors:
• **WEI, Fan
Shenzhen, Guangdong 518129 (CN)**
• **WANG, Lei
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **DATA TRANSMISSION METHOD AND COMMUNICATION APPARATUS**

(57) A data transmission method and a communication apparatus are provided. The data transmission method includes: A terminal device and a network device each determine a first sequence number of the terminal device on a first time-frequency resource, and determine, from a signature sequence set, a first signature sequence corresponding to the first sequence number, where a difference between quantities of sequence numbers corresponding to any two signature sequences in the signature sequence set is less than or equal to a first value, and sequence numbers corresponding to any two signature sequences in the signature sequence set are different. The terminal device sends data on the first time-frequency resource by using the first signature sequence. Correspondingly, the network device receives the data on the first time-frequency resource. The network device decodes the data based on the first signature sequence. According to embodiments of this application, a centralized collision of signature sequences can be avoided, and a degree of distinguishing between terminal devices by using the signature sequences can be improved.

FIG. 6

## Description

This application claims priority to Chinese Patent Application No. 202310027172.7, filed with the China National Intellectual Property Administration on January 9, 2023 and entitled "DATA TRANSMISSION METHOD AND COMMUNICATION APPARATUS", which is incorporated herein by reference in its entirety.

## TECHNICAL FIELD

This application relates to the field of communication technologies, and in particular, to a data transmission method and a communication apparatus.

## BACKGROUND

In a wireless communication system, in a non-orthogonal multiple access (non-orthogonal multiple access, NOMA) manner, a plurality of terminal devices may share same resources such as time domain, frequency domain, or spatial domain resources in a communication process. For example, different signature sequences (signature sequences, or referred to as codewords) may be configured for devices in the wireless communication system. A transmit end maps the signature sequence to a frequency domain carrier, and a receive end distinguishes the transmit end by using the signature sequence or a signature sequence pattern (signature pattern). In an implementation, a quantity of interfering users on a unit resource may be reduced by using a signature sequence of a sparse structure, so that the receive end can perform data decoding based on algorithms such as a low-complexity message transfer algorithm.

To improve system performance, the transmit end may send data in a signature sequence hopping manner, to be specific, the transmit end sends data in different time-frequency resource blocks (or time-frequency resource areas) by using different signature sequences or signature sequence patterns. In this implementation, a network device may allocate one random parameter (or one random algorithm, which may also be referred to as one random seed) to each terminal device in a network, and generate a hopping sequence of each terminal device in a random manner.

However, when the terminal device generates a hopping sequence in the random manner, there is a problem of a centralized collision of signature sequences. To be specific, a large quantity of terminal devices select a same signature sequence in a same time-frequency resource block. This reduces a degree of distinguishing between the terminal devices by using the signature sequence.

## SUMMARY

Embodiments of this application provide a data transmission method and a communication apparatus, to avoid a centralized collision of signature sequences, and improve a degree of distinguishing between terminal devices by using the signature sequences.

According to a first aspect, an embodiment of this application provides a data transmission method. The method may be performed by a terminal device, or may be performed by a component (for example, a chip or a circuit) of the terminal device. This is not limited herein. The method includes:

determining a first sequence number of the terminal device on a first time-frequency resource; determining, from a signature sequence set, a first signature sequence corresponding to the first sequence number, where a difference between quantities of sequence numbers corresponding to any two signature sequences in the signature sequence set is less than or equal to a first value, and sequence numbers corresponding to any two signature sequences in the signature sequence set are different; and sending data on the first time-frequency resource by using the first signature sequence.

In this embodiment of this application, on the first time-frequency resource, one terminal device corresponds to one sequence number, and the sequence number corresponds to a signature sequence. One signature sequence corresponds to one or more sequence numbers. A correspondence between a sequence number and a signature sequence enables a quantity of sequence numbers corresponding to each signature sequence in the signature sequence set to be less than or equal to the first value. Therefore, a quantity of terminal devices that select the first signature sequence on the first time-frequency resource can be effectively limited, a centralized collision of signature sequences can be avoided, a degree of distinguishing between terminal devices by using the signature sequences can be improved, and decoding performance of a receive end (for example, a network device) can be improved.

According to a second aspect, an embodiment of this application provides a data transmission method. The method may be performed by a network device, or may be performed by a component (for example, a chip or a circuit) of the network device, or may be implemented by a logical node, a logical module, or software that can implement all or some functions of the network device. This is not limited herein. The method includes:

determining a first sequence number of a terminal device on a first time-frequency resource; determining, from a signature sequence set, a first signature sequence corresponding to the first sequence number, where a difference between quantities of sequence numbers corresponding to any two signature sequences in the signature sequence set is less than or equal to a first value, and sequence numbers corresponding to any two signature sequences in the signature sequence set are different; receiving data from the terminal device on the first time-frequency resource; and decoding the data based on the first signature sequence.

In this embodiment of this application, on the first time-frequency resource, one terminal device corresponds to one sequence number, and the sequence number corresponds to a signature sequence. One signature sequence corresponds to one or more sequence numbers. A correspondence between a sequence number and a signature sequence enables a quantity of sequence numbers corresponding to each signature sequence in the signature sequence set to be less than or equal to the first value. Therefore, a quantity of terminal devices that select the first signature sequence on the first time-frequency resource can be effectively limited, a centralized collision of signature sequences can be avoided, a degree of distinguishing between terminal devices by using the signature sequences can be improved, and decoding performance of a receive end (for example, the network device) can be improved.

With reference to the first aspect and the second aspect, in a possible implementation, the terminal device is included in a terminal device set, a terminal device in the terminal device set transmits data on the first time-frequency resource, and sequence numbers of any two terminal devices in the terminal device set on the first time-frequency resource are different.

In this embodiment of this application, each terminal device in the terminal device set corresponds to one sequence number, and sequence numbers of any two terminal devices on the first time-frequency resource are different. The sequence number is associated with the terminal device, and a difference between quantities of sequence numbers corresponding to any two signature sequences in the signature sequence set is less than or equal to the first value. In other words, a difference between quantities of terminal devices corresponding to any two signature sequences in the signature sequence set on the first time-frequency resource is less than or equal to the first value. Therefore, a quantity of terminal devices that select the first signature sequence can be effectively limited, a centralized collision of signature sequences can be avoided, a degree of distinguishing between terminal devices by using the signature sequences can be improved, and a waste of resources can be avoided.

With reference to the first aspect and the second aspect, in a possible implementation, determining, from the signature sequence set, the first signature sequence corresponding to the first sequence number includes:
determining a second sequence number based on the first sequence number, where the second sequence number is a sequence number of the first signature sequence in the signature sequence set.

In this embodiment of this application, each signature sequence in the signature sequence set has a corresponding sequence number in the signature sequence set, and the sequence number of the first signature sequence in the signature sequence set may be determined based on the first sequence number, so that the first signature sequence can be quickly determined.

With reference to the first aspect and the second aspect, in a possible implementation, the first sequence number and the second sequence number satisfy either of the following: Sn=floor(S1/Np)+1, and Np=ceil(N/Ns), where Sn is the second sequence number, floor is rounding down, S1 is the first sequence number, ceil is rounding up, N is a quantity of terminal devices, and Ns is a quantity of signature sequences in the signature sequence set; or Sn=mod(S1, Ns)+1, where Sn is the second sequence number, mod is a modulo operation, S1 is the first sequence number, and Ns is a quantity of signature sequences in the signature sequence set.

With reference to the first aspect and the second aspect, in a possible implementation, determining the first sequence number of the terminal device on the first time-frequency resource includes:
determining the first sequence number based on at least one of a random algorithm, the quantity of terminal devices in the terminal device set, and a third sequence number, where the third sequence number is a sequence number of the terminal device on a second time-frequency resource, the terminal device in the terminal device set transmits data on the second time-frequency resource, and the second time-frequency resource is different from the first time-frequency resource.

In this embodiment of this application, on the first time-frequency resource, one terminal device corresponds to one sequence number, and the sequence number corresponds to a signature sequence. The terminal device and the network device may each determine the first sequence number based on at least one of the random algorithm, the quantity of terminal devices, and the third sequence number, so that the first sequence number can be more properly determined, and randomness of the first sequence number can be ensured. In this way, the first signature sequence is random, a degree of distinguishing between terminal devices by using the signature sequences is improved, and decoding performance of a receive end (for example, the network device) is improved.

With reference to the first aspect and the second aspect, in a possible implementation, the first time-frequency resource and the second time-frequency resource are continuous in time domain or frequency domain.

With reference to the first aspect and the second aspect, in a possible implementation, determining the first sequence number based on at least one of the random algorithm, the quantity of terminal devices in the terminal device set, and the third sequence number includes:
generating a first random sequence based on the random algorithm and the quantity of terminal devices, where a length of the first random sequence is greater than or equal to the quantity of terminal devices; and determining the first sequence number based on a second random sequence and the third sequence number, where the second random sequence is determined based on the first random sequence.

In this embodiment of this application, after the first random sequence is generated based on the random algorithm, the second random sequence is generated based on the first random sequence. After the second random sequence is generated, the first sequence number can be quickly determined based on the second random sequence and the third sequence number, so that data transmission efficiency can be improved.

With reference to the first aspect and the second aspect, in a possible implementation, the second random sequence is an inverse sequence of the first random sequence, and the first random sequence and the second random sequence satisfy the following formula: $\pi^{-1}(\pi(a)) = a$, where $\pi$ is the first random sequence, $\pi^{-1}$ is the second random sequence, a is a positive integer less than or equal to N1, N1 is the length of the first random sequence, and N1 is a positive integer.

With reference to the first aspect and the second aspect, in a possible implementation, the first sequence number satisfies the following formula: $S1=\pi^{-1}(S2)$, where $\pi^{-1}$ is the second random sequence, S1 is the first sequence number, and S2 is the third sequence number.

With reference to the first aspect and the second aspect, in a possible implementation, the random algorithm includes at least one of a Fisher-Yates shuffle algorithm, a Sattolo shuffle algorithm, an S-random interleaver, a Welch-Costas interleaver, a golden interleaver, and a multidimensional interleaver.

With reference to the first aspect and the second aspect, in a possible implementation, determining the first sequence number based on at least one of the random algorithm, the quantity of terminal devices in the terminal device set, and the third sequence number includes:

determining the first sequence number based on the random algorithm, the quantity of terminal devices, the third sequence number, and the quantity of signature sequences in the signature sequence set.

With reference to the first aspect and the second aspect, in a possible implementation, the random algorithm includes a row-column interleaver, and the first sequence number, the third sequence number, the quantity of terminal devices, and the quantity of signature sequences satisfy the following formulas:

S2=Ns*a+b, and S1=N/Ns*b+a, where S2 is the third sequence number, Ns is the quantity of signature sequences in the signature sequence set, a is a quotient of S2 divided by Ns, b is a remainder of S2 divided by Ns, S1 is the first sequence number, and N is the quantity of terminal devices.

In this embodiment of this application, a calculation process can be simplified by using the row-column interleaver, and the first sequence number can be quickly determined, thereby improving data transmission efficiency.

With reference to the first aspect and the second aspect, in a possible implementation, the terminal device set transmits data on a time-frequency resource set, the time-frequency resource set includes the first time-frequency resource and the second time-frequency resource, and determining the first sequence number based on at least one of the random algorithm, the quantity of terminal devices in the terminal device set, and the third sequence number includes:

determining the first sequence number based on the random algorithm, the quantity of terminal devices, the third sequence number, and a fourth sequence number, where the fourth sequence number is a sequence number of the first time-frequency resource in the time-frequency resource set.

With reference to the first aspect and the second aspect, in a possible implementation, the random algorithm includes a row-column interleaver, and the first sequence number, the quantity of terminal devices, the third sequence number, and the fourth sequence number satisfy the following formulas:

$$c = \text{ceil}(S2/t); \ d = \text{mod}(S2-1, t) + 1; \ NR = \text{mod}(N-1, t) + 1;$$

and

$$S1 = \begin{cases} \text{ceil}(N/t) * (d-1) + c, d \leq NR + 1 \\ [\text{ceil}(N/t)-1] * (d-1) + NR + c, d > NR + 1 \end{cases},$$

where

S2 is the third sequence number, t is the fourth sequence number, S1 is the first sequence number, ceil is rounding up, N is the quantity of terminal devices, mod is a modulo operation, and Ns is the quantity of signature sequences in the signature sequence set.

In this embodiment of this application, the second time-frequency resource may be a 1st time-frequency resource in the time-frequency resource set. In other words, the terminal device or the network device may write user identities of the terminal devices in the terminal device set into a matrix row by row and read the user identities column by column in an order of sequence numbers of the terminal devices in the terminal device set on the 1st time-frequency resource in the time-frequency resource set, to obtain the sequence numbers of the terminal devices on the first time-frequency resource. A calculation process can be simplified by using the row-column interleaver, and the first sequence number can be quickly determined, thereby improving data transmission efficiency.

With reference to the first aspect and the second aspect, in a possible implementation, the random algorithm includes a linear congruential interleaver, the first sequence number, the third sequence number, and the quantity of terminal devices satisfy the following formula: $S1=mod(S2*p+s, N)$, where S1 is the first sequence number, S2 is the third sequence number, mod is a modulo operation, N is the quantity of terminal devices, p and N are relatively prime, and s is any positive integer.

In this embodiment of this application, a calculation process can be simplified by using the linear congruential interleaver, and the first sequence number can be quickly determined, thereby improving data transmission efficiency.

With reference to the first aspect, in a possible implementation, the method further includes: receiving a first message, where the first message indicates the signature sequence set.

In this embodiment of this application, the network device may indicate, to the terminal device by using the first message, the signature sequence set, the terminal device set, the random algorithm, the time-frequency resource set, and the like, so that the first sequence number determined by the terminal device is consistent with the first sequence number determined by the network device.

With reference to the second aspect, in a possible implementation, the method further includes: sending a first message, where the first message indicates the signature sequence set.

In this embodiment of this application, the network device may indicate, to the terminal device by using the first message, the signature sequence set, the terminal device set, the random algorithm, the time-frequency resource set, and the like, so that the first sequence number determined by the terminal device is consistent with the first sequence number determined by the network device.

According to a third aspect, an embodiment of this application provides a communication apparatus, configured to perform the method in any one of the first aspect or the possible implementations. The communication apparatus includes a unit configured to perform the method in any one of the first aspect or the possible implementations. For example, the communication apparatus may be a terminal device configured to perform the method in any one of the first aspect or the possible implementations, or a component (for example, a chip or a circuit) of the terminal device.

According to a fourth aspect, an embodiment of this application provides a communication apparatus, configured to perform the method in any one of the second aspect or the possible implementations. The communication apparatus includes a unit configured to perform the method in any one of the second aspect or the possible implementations. For example, the communication apparatus may be a network device configured to perform the method in any one of the second aspect or the possible implementations, or a component (for example, a chip or a circuit) of the network device, or a logical node, a logical module, software, or the like that can implement all or some functions of the network device.

According to a fifth aspect, an embodiment of this application provides a communication apparatus. The communication apparatus includes a processor, configured to perform the method in any one of the first aspect or the possible implementations. Alternatively, the processor is configured to execute a program stored in a memory. When the program is executed, the method in any one of the first aspect or the possible implementations is performed. For example, the communication apparatus may be a terminal device configured to perform the method in any one of the first aspect or the possible implementations, or a component (for example, a chip or a circuit) of the terminal device.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a sixth aspect, an embodiment of this application provides a communication apparatus. The communication apparatus includes a processor, configured to perform the method in any one of the second aspect or the possible implementations. Alternatively, the processor is configured to execute a program stored in a memory. When the program is executed, the method in any one of the second aspect or the possible implementations is performed. For example, the communication apparatus may be a network device configured to perform the method in any one of the second aspect or the possible implementations, or a component (for example, a chip or a circuit) of the network device, or a logical node, a logical module, software, or the like that can implement all or some functions of the network device.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a seventh aspect, an embodiment of this application provides a communication apparatus. The communication apparatus includes a logic circuit and an interface. The logic circuit is coupled to the interface. The logic circuit is configured to: determine a first sequence number, and determine a first signature sequence based on the first sequence number. The interface is further configured to output data.

It may be understood that for descriptions of the first sequence number and the first signature sequence, refer to the method in any one of the first aspect or the possible implementations. Details are not described herein again.

According to an eighth aspect, an embodiment of this application provides a communication apparatus. The communication apparatus includes a logic circuit and an interface. The logic circuit is coupled to the interface. The logic circuit is configured to: determine a first sequence number, and determine a first signature sequence based on the first sequence number. The interface is configured to input data. The logic circuit is further configured to decode the data based on the first signature sequence.

It may be understood that for descriptions of the first sequence number and the first signature sequence, refer to the method in any one of the second aspect or the possible implementations. Details are not described herein again.

According to a ninth aspect, an embodiment of this application provides a computer-readable storage medium. The computer-readable storage medium is configured to store a computer program. When the computer program is run on a computer, the method in the first aspect or any one of the possible implementations of the first aspect is performed, or the method in the second aspect or any one of the possible implementations of the second aspect is performed.

According to a tenth aspect, an embodiment of this application provides a computer program product. The computer program product includes a computer program or computer code. When the computer program product runs on a computer, the method in the first aspect or any one of the possible implementations of the first aspect is performed, or the method in the second aspect or any one of the possible implementations of the second aspect is performed.

According to an eleventh aspect, an embodiment of this application provides a communication system. The communication system includes a network device and a terminal device. The terminal device is configured to perform the method in the first aspect or any one of the possible implementations of the first aspect. The network device is configured to perform the method in the second aspect or any one of the possible implementations of the second aspect.

**BRIEF DESCRIPTION OF DRAWINGS**

The following describes the accompanying drawings used in embodiments of this application.

FIG. 1 is a diagram of a communication system according to an embodiment of this application;
FIG. 2 is a diagram of a relay communication system according to an embodiment of this application;
FIG. 3 is a diagram of a signature sequence resource pool according to an embodiment of this application;
FIG. 4 is a diagram of a signature sequence hopping scenario according to an embodiment of this application;
FIG. 5 is a diagram of a signature sequence pattern hopping scenario according to an embodiment of this application;
FIG. 6 is a diagram of interaction of a data transmission method according to an embodiment of this application;
FIG. 7 is a diagram of interaction of another data transmission method according to an embodiment of this application;
FIG. 8 is a diagram of a simulation result according to an embodiment of this application;
FIG. 9 is a diagram of a structure of a communication apparatus according to an embodiment of this application;
FIG. 10 is a diagram of a structure of another communication apparatus according to an embodiment of this application; and
FIG. 11 is a diagram of a structure of still another communication apparatus according to an embodiment of this application.

**DESCRIPTION OF EMBODIMENTS**

In the specification, the claims, and the accompanying drawings of this application, the terms "first", "second", and the like are merely intended to distinguish between different objects, but do not limit a sequence, a time sequence, a priority, or an importance degree of a plurality of objects. In embodiments of this application, "a plurality of" refers to two or more than two. In addition, the terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, devices, or the like. In addition, unless otherwise stated, the character "/" generally represents an "or" relationship between associated objects.

An "embodiment" mentioned in this specification means that a particular characteristic, structure, or feature described with reference to this embodiment may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that embodiments described in this specification may be combined with another embodiment.

A network device in embodiments of this application may be a network device that accesses a communication system and has a wireless transceiver function, or a chip or a chip system that may be disposed in the network device. The network device may be a device that connects a terminal device to a wireless network, and may be specifically a base station. There may be various forms of base stations, for example, a macro base station, a micro base station (also referred to as a small cell), a relay station, and an access point. The base station may be specifically an access point (access point, AP) in a wireless local area network (wireless local area network, WLAN), a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (Evolved NodeB, eNB or eNodeB), a relay station, an access point, a vehicle-mounted device, or a wearable device in LTE, a next generation NodeB (next generation NodeB, gNB) in a 5G system, a base station in a future evolved public land mobile communication network (public land mobile network, PLMN), or the like.

In some deployment, the network device (for example, a base station) may include a central unit (central unit, CU) and a distributed unit (distributed unit, DU). To be specific, functions of a network device in an access network are split, some functions of the network device are deployed on a CU, and remaining functions are deployed on a DU. In addition, a plurality of DUs share one CU. This reduces costs and facilitates network expansion. In some other deployment of the network device, the CU may be further split into a CU-control plane (control plane, CP), a CU-user plane (user plane, UP), and the like. In still some other deployment of the network device, the network device may alternatively be an antenna unit (radio unit, RU), or the like. In still some other deployment of the network device, the network device may alternatively be an open radio access network (open radio access network, ORAN) architecture or the like. A specific type of the network device is not limited in this application. For example, when the network device is of the ORAN architecture, the network device in embodiments of this application may be a network device in an ORAN, a module in the network device, or the like. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU.

The terminal device in embodiments of this application may be a terminal that accesses a communication system and has a wireless transceiver function, or a chip or a chip system that may be disposed in the terminal. The terminal device may also be referred to as a user equipment (user equipment, UE), a terminal, or the like. The terminal device is a device having a wireless transceiver function, and may be deployed on land, including an indoor device or outdoor device, a handheld device, a wearable device, or a vehicle-mounted device; may be deployed on water, for example, on a ship; or may be deployed in air, for example, on an airplane, a balloon, or a satellite. The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a customer-premises equipment (customer-premises equipment, CPE), or the like. It may be understood that the terminal device may alternatively be a terminal device in a future 6G network, a terminal device in a future evolved PLMN, or the like.

It may be understood that the terminal device shown in this application may not only include a vehicle (for example, an entire vehicle) in an internet of vehicles, but also include a vehicle-mounted device, a vehicle-mounted terminal, or the like in the internet of vehicles. A specific form of the terminal device used in the internet of vehicles is not limited in this application.

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system (for example, 6G) emerging in future communication development, provided that an entity in the communication system sends configuration information to another entity, and sends data to the another entity, or receives data sent by the another entity; and the another entity receives the configuration information, and sends the data to the configuration information sending entity based on the configuration information, or receives the data sent by the configuration information sending entity.

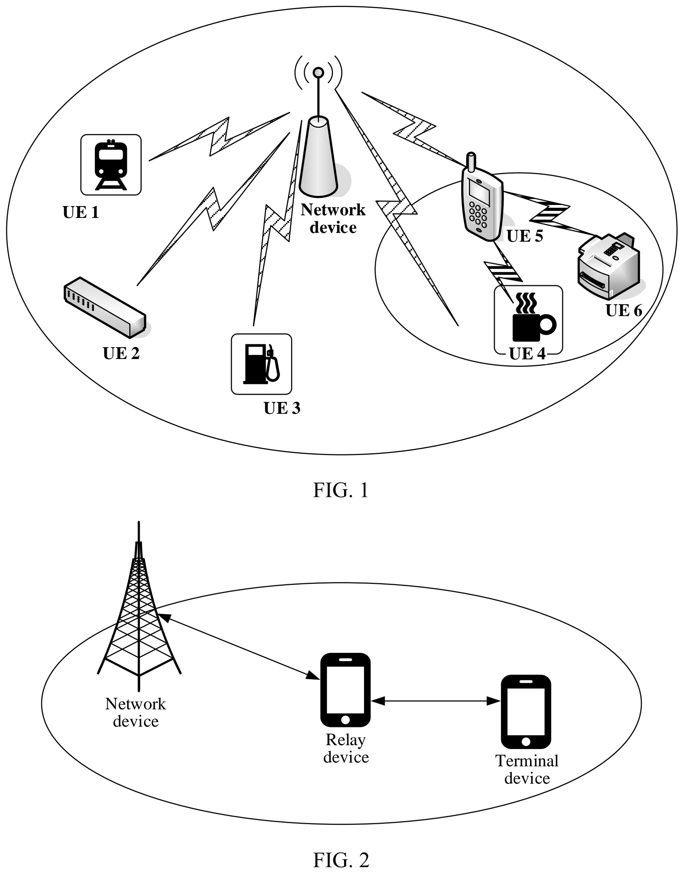

Technical solutions provided in this application may be further applied to machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-everything (vehicle-to-everything, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. For example, in FIG. 1 described below, terminal devices may communicate with each other by using the D2D technology, the M2M technology, or the V2X technology.

FIG. 1 is a diagram of a communication system according to an embodiment of this application. When a configuration information sending entity is a network device, and a configuration information receiving entity is a terminal device, the communication system may include at least one network device and at least one terminal device. As shown in FIG. 1, a network device and six terminal devices (a UE 1 to a UE 6) may form a communication system. In the communication system, the UE 1 to the UE 6 may send uplink data or an uplink signal, for example, a sounding reference signal (sounding reference signal, SRS) or a physical uplink shared channel (physical uplink shared channel, PUSCH), to the network device, and the network device needs to receive the uplink data sent by the UE 1 to the UE 6. In addition, the network device may send a downlink signal, for example, configuration information or downlink control information (downlink control information, DCI), to the UE 1 to the UE 6.

For example, the UE 4 to the UE 6 may also form a communication system. In this case, both the configuration information sending entity and the configuration information receiving entity may alternatively be terminal devices. For example, in an internet of vehicles system, a terminal device 1 sends configuration information to a terminal device 2, and receives data sent by the terminal device 2. The terminal device 2 receives the configuration information sent by the terminal device 1, and sends the data to the terminal device 1.

It should be understood that, FIG. 1 shows an example of one network device, six UEs, and a communication link between communication devices. Optionally, the communication system may include a plurality of network devices, and a coverage area of each network device may include another quantity of UEs, for example, more or fewer UEs. This is not limited in this application.

A plurality of antennas may be configured for the foregoing communication devices, for example, the network device and the UE 1 to the UE 6 in FIG. 1. The plurality of antennas may include at least one transmit antenna for sending a signal, at least one receive antenna for receiving a signal, and the like. A specific structure of each communication device is not limited in embodiments of this application. Optionally, the communication system may further include another network entity, for example, a network controller or a mobility management entity. This is not limited in embodiments of this application.

It may be understood that a method provided in this application may be applied to not only the communication system shown in FIG. 1 but also a communication system shown in FIG. 2.

FIG. 2 is a diagram of a relay communication system according to an embodiment of this application. As shown in FIG. 2, the relay communication system may be a single-hop (single-hop) or multi-hop (multi-hop) relay system with a relay node. The relay communication system may include at least one network device, at least one relay device, and at least one terminal device. Data transmission between the network device and the terminal device may be forwarded by using the relay device. A form of the relay device may be a small cell, an integrated access and backhaul (integrated access and backhaul, IAB) node, a distributed unit DU (Distributed Unit), a terminal, a transmission reception point TRP (Transmitter and Receiver Point), or the like.

Embodiments shown below are applicable to the communication system shown in FIG. 1, or are applicable to the communication system shown in FIG. 2. Details are not described below again.

In a wireless communication system, in a non-orthogonal multiple access (non-orthogonal multiple access, NOMA) manner (including sparse code multiple access (sparse code multiple access, SCMA), multiple user shared access (multiple user shared access, MUSA), pattern division multiple access (pattern division multiple access, PDMA), interleave-grid multiple access (interleave-grid multiple access, IGMA), and the like), a plurality of terminal devices may share same resources such as time domain, frequency domain, or spatial domain resources in a communication process. For example, different signature sequences (signature sequences, or referred to as codewords) may be configured for devices in the wireless communication system. A transmit end maps the signature sequence to a frequency domain carrier, and a receive end distinguishes the transmit end by using the signature sequence or a signature sequence pattern (signature pattern). In an implementation, a quantity of interfering users on a unit resource may be reduced by using a signature sequence of a sparse structure, so that the receive end can perform data decoding based on algorithms such as a low-complexity message transfer algorithm.

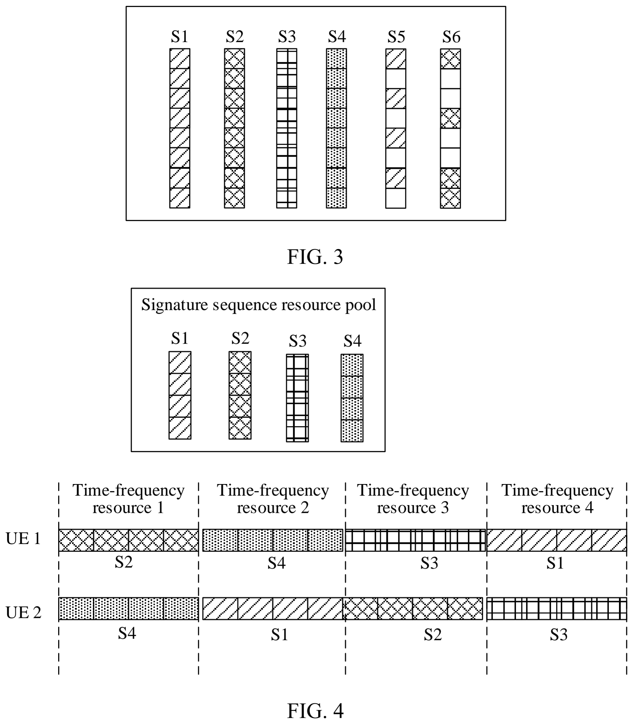

FIG. 3 shows an example of a signature sequence resource pool of code domain NOMA according to an embodiment of this application. As shown in FIG. 3, the signature sequence resource pool may include a plurality of different signature sequences. In FIG. 3, six signature sequences are used as an example, and the signature sequences may be sparse or non-sparse.

To improve system performance, a transmit end may send data in a signature sequence hopping manner, to be specific, the transmit end sends data in different time-frequency resource blocks (or time-frequency resource areas, or referred to as time-frequency resources) by using different signature sequences or signature sequence patterns.

For example, as shown in FIG. 4, a wireless communication system includes at least two terminal devices (for example, a UE 1 and a UE 2), and a signature sequence resource pool may include four signature sequences (which are respectively S1, S2, S3, and S4). The UE 1 sends data on a time-frequency resource 1 by using the signature sequence S2, sends data on a time-frequency resource 2 by using the signature sequence S4, sends data on a time-frequency resource 3 by using the signature sequence S3, and sends data on a time-frequency resource 4 by using the signature sequence S1. The UE 2 sends data on the time-frequency resource 1 by using the signature sequence S4, sends data on the time-frequency resource 2 by using the signature sequence S1, sends data on the time-frequency resource 3 by using the signature sequence S2, and sends data on the time-frequency resource 4 by using the signature sequence S3.

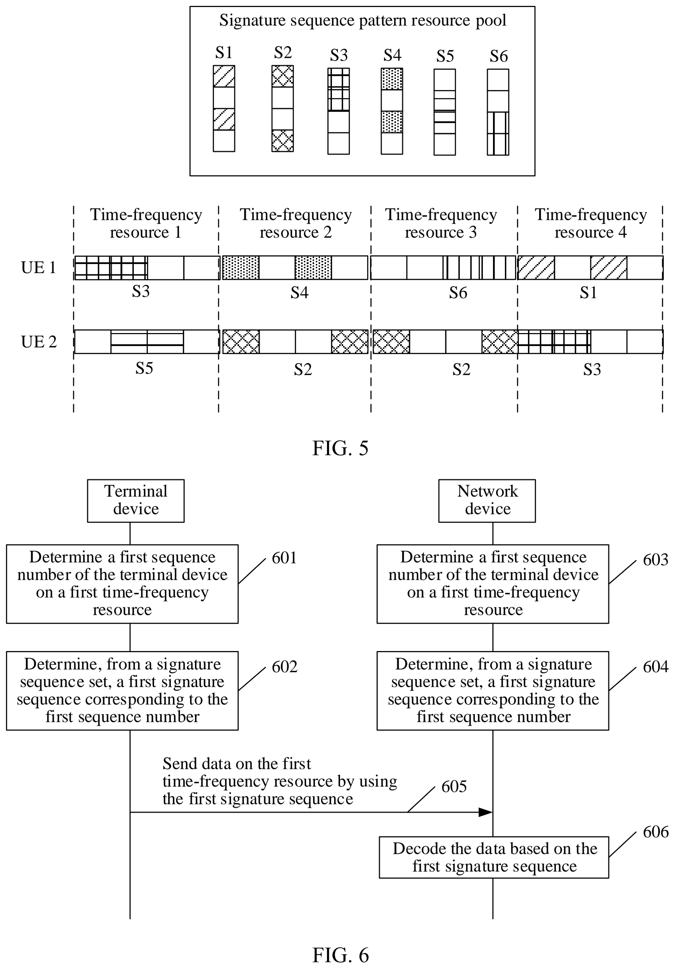

As shown in FIG. 5, a wireless communication system includes at least two terminal devices (for example, a UE 1 and a UE 2), and a signature sequence pattern source pool may include six signature sequence patterns (which are respectively S1, S2, S3, S4, S5, and S6). The UE 1 sends data on a time-frequency resource 1 by using the signature sequence pattern S3, sends data on a time-frequency resource 2 by using the signature sequence pattern S4, sends data on a time-frequency resource 3 by using the signature sequence pattern S6, and sends data on a time-frequency resource 4 by using the signature sequence pattern S1. The UE 2 sends data on the time-frequency resource 1 by using the signature sequence pattern S5, sends data on the time-frequency resource 2 by using the signature sequence pattern S2, sends data on the time-frequency resource 3 by using the signature sequence pattern S2, and sends data on the time-frequency resource 4 by using the signature sequence pattern S3.

For example, in the foregoing wireless communication system, a network device may allocate one random parameter (or one random algorithm, which may also be referred to as one random seed) to each terminal device in a network, and generate, in a random manner, a signature sequence (that is, a signature hopping sequence of the terminal device) used by each terminal device on each time-frequency resource. For example, in the random generation manner, some possible signature hopping sequences of the terminal device may be shown in Table 1. Four terminal devices (a UE 1 to a UE 4) are used as an example. Table 1 shows signature sequences that may be separately used by the UE 1 to the UE 4 on a time-frequency resource 1 to a time-frequency resource 6. For example, the signature sequences used by the UE on the time-frequency resource 1 to the time-frequency resource 6 are respectively S1, S3, S2, S6, S3, and S2, that is, a signature hopping sequence of the UE 1 on the time-frequency resource 1 to the time-frequency resource 6 is (S1, S3, S2, S6, S3, S2).

Table 1

|  | Time-frequency resource 1 | Time-frequency resource 2 | Time-frequency resource 3 | Time-frequency resource 4 | Time-frequency resource 5 | Time-frequency resource 6 |
|---|---|---|---|---|---|---|
| UE 1 | S1 | S3 | S2 | S6 | S3 | S2 |
| UE 2 | S1 | S3 | S2 | S6 | S3 | S3 |
| UE 3 | S3 | S1 | S2 | S3 | S5 | S6 |
| UE 4 | S5 | S3 | S1 | S5 | S2 | S6 |

However, when the terminal device generates the hopping sequence in the random manner, there is a problem of a centralized collision of signature sequences. To be specific, a large quantity of terminal devices select a same signature sequence. For example, in Table 1, on the time-frequency resource 3, a centralized collision of the signature sequence 2 occurs on the UE 1, the UE 2, and the UE 3. This reduces a degree of distinguishing between the terminal devices by using the signature sequence, causing deterioration of decoding performance of a receive end. In addition, only a small quantity of users select a remaining signature sequence (for example, only the UE 4 selects the signature sequence S1 on the time-frequency resource 3), causing a resource waste problem.

In view of this, embodiments of this application provide a data transmission method and a communication apparatus, to avoid a problem of centralized collision of signature sequences caused by random hopping, improve a degree of distinguishing between terminal devices by using the signature sequences, and improve decoding performance of a receive end.

The method provided in embodiments of this application may be applied to the communication system shown in FIG. 1 or FIG. 2. Alternatively, the method may be applied to a terminal device and a network device. The terminal device may be the terminal device described above. The network device may be the network device described above.

It may be understood that in an interaction diagram in this application, an example in which the network device and the terminal device are execution bodies of interaction illustration is used to illustrate the method. However, the execution bodies of the interaction illustration are not limited in this application. For example, the network device in the interaction diagram may alternatively be a chip, a chip system, or a processor that supports the network device in implementing the method, or may be a logical node, a logical module, or software that can implement all or some functions of the network device. The terminal device in the interaction diagram may alternatively be a chip, a chip system, or a processor that supports the terminal in implementing the method.

In embodiments of this application, "send information to ... (terminal)" may be understood as that a destination end of the information is the terminal, and may include directly or indirectly sending information to the terminal; and "receive information from ... (terminal)" may be understood as that a source end of the information is the terminal, and may include directly or indirectly receiving information from the terminal. Necessary processing may be performed on the information between the source end at which the information is sent and the destination end to which the information is sent. For example, one or more of coding, modulation, power matching, and resource mapping may be performed on the information at the source end at which the information is sent. For another example, one or more of resource demapping, demodulation, and decoding may be performed on the information at the destination end at which the information is received. Similar descriptions in this application may be understood similarly. Details are not described herein again.

FIG. 6 is a diagram of interaction of a data transmission method according to an embodiment of this application. As shown in FIG. 6, the method includes the following steps.

601: A terminal device determines a first sequence number of the terminal device on a first time-frequency resource.

For example, the first sequence number may also be understood as an index, an identifier, or the like of the terminal device on the first time-frequency resource, and the first sequence number is used to distinguish the terminal device from one or more terminal devices that transmit data on the first time-frequency resource. For example, the first sequence number may be related to a quantity of one or more terminal devices that transmit data on the first time-frequency resource. For example, a value range of the first sequence number is 0 to N, and N is the quantity of one or more terminal devices that transmit data on the first time-frequency resource. The terminal device may randomly select a number from 0 to N as the first sequence number, or may select a number from 0 to N as the first sequence number based on a specified algorithm. Alternatively, the first sequence number may be indicated by a network device.

In some possible implementations, the terminal device is included in a terminal device set, and a terminal device in the terminal device set transmits data on the first time-frequency resource. Each terminal device in the terminal device set corresponds to one sequence number on the first time-frequency resource, and sequence numbers of any two terminal devices in the terminal device set on the first time-frequency resource are different.

For example, the terminal device may arrange terminal devices in the terminal device set, and the first sequence number is a location (or an index) of the terminal device in the terminal device set. A value of a sequence number corresponding to any terminal device in the terminal device set is less than or equal to a quantity of terminal devices in the terminal device set.

For example, sequence numbers of the terminal devices in the terminal device set may start from 0, or may start from 1. For example, if the terminal device ranks first in the terminal device set, the first sequence number may be 0 or 1.

In this implementation, a sequence number is associated with a terminal device, and a quantity of sequence numbers corresponding to one signature sequence may be limited by using a correspondence between a sequence number and a signature sequence. In this way, a quantity of terminal devices corresponding to one signature sequence is effectively limited, and a centralized collision of signature sequences is avoided.

602: The terminal device determines, from a signature sequence set, a first signature sequence corresponding to the first sequence number, where a difference between quantities of sequence numbers corresponding to any two signature sequences in the signature sequence set is less than or equal to a first value, and sequence numbers corresponding to any two signature sequences in the signature sequence set are different.

For example, the first value may be configured by the network device.

For example, the first value may be related to the quantity of one or more terminal devices that transmit data on the first time-frequency resource and a quantity of signature sequences in the signature sequence set. For example, the first value is less than or equal to ceil(N/Ns), where N is the quantity of one or more terminal devices, Ns is the quantity of signature sequences in the signature sequence set, and ceil is rounding up.

For example, the first value may be 0 or 1, to be specific, quantities of sequence numbers corresponding to any two signature sequences in the signature sequence set are equal, or a difference between quantities of sequence numbers corresponding to any two signature sequences in the signature sequence set does not exceed 1. In this application, one sequence number corresponds to one terminal device. In other words, a difference between quantities of terminal devices corresponding to any two signature sequences in the signature sequence set is less than or equal to the first value. For example, quantities of terminal devices corresponding to any two signature sequences in the signature sequence set are equal, or a difference between quantities of terminal devices corresponding to any two signature sequences in the signature sequence set does not exceed 1. It should be understood that the first value 0 or 1 is merely an example, and should not constitute a limitation on this application. For example, the first value may alternatively be 2, 3, or 4.

For example, the signature sequence set may also be referred to as a signature sequence resource pool, and may be a set of signature sequences configured by the network device for the terminal device.

In a possible implementation, the terminal device determines a second sequence number based on the first sequence number, where the second sequence number is a sequence number of the first signature sequence in the signature sequence set.

For example, each signature sequence in the signature sequence set has a corresponding sequence number in the signature sequence set. For example, the second sequence number may be a location (or an index) of the first signature sequence in the signature sequence set. For example, if the first signature sequence ranks first in the signature sequence set, the second sequence number may be 0 or 1.

In this implementation, the sequence number of the first signature sequence in the signature sequence set is determined based on the first sequence number, so that the first signature sequence can be quickly determined.

In a possible implementation, the first sequence number and the second sequence number satisfy the following formulas:

$$Sn = floor(S1/Np) + 1$$

$$Np = ceil(N/Ns)$$

$Sn$ is the second sequence number, floor is rounding down, $S1$ is the first sequence number, ceil is rounding up, $N$ is the quantity of terminal devices, and $Ns$ is the quantity of signature sequences in the signature sequence set. $Np$ is a quantity of sequence numbers corresponding to each signature sequence in the signature sequence set, or $Np$ is a quantity of terminal devices configured for each signature sequence.

In this implementation, a sequence number 0 to a sequence number $Np-1$ correspond to a 1st signature sequence S1 in the signature sequence set, and a sequence number $Np$ to a sequence number $2Np-1$ correspond to a 2nd signature sequence S2 in the signature sequence set. For example, if the quantity of terminal devices is 12, and the quantity of signature sequences in the signature sequence set is 4, $Np$ is 3, to be specific, a quantity of terminal devices corresponding to each signature sequence is 3. In this case, the sequence number 0 to a sequence number 2 correspond to the 1st signature sequence S1 in the signature sequence set, a sequence number 3 to a sequence number 5 correspond to the 2nd signature sequence S2 in the signature sequence set, a sequence number 6 to a sequence number 8 correspond to a 3rd signature sequence S3 in the signature sequence set, and a sequence number 9 to a sequence number 11 correspond to a 4th signature sequence S4 in the signature sequence set.

If sequence numbers corresponding to a terminal device on 12 time-frequency resources are respectively 0, 5, 6, 11, 4, 3, 8, 2, 10, 9, 1 and 7, sequence numbers of signature sequences corresponding to the terminal device on the 12 time-frequency resources are respectively:

$$Sn(t = 1) = floor(0/3) + 1 = 1,$$

$$Sn(t = 2) = floor(5/3) + 1 = 2,$$

$$Sn(t = 3) = floor(6/3) + 1 = 3,$$

...

$Sn(t = 1)$ represents a sequence number of a signature sequence of the terminal device on a time-frequency resource 1. For sequence numbers of signature sequences on a time-frequency resource 4 to a time-frequency resource 12, refer to calculation manners on the time-frequency resource 1 to a time-frequency resource 3. Details are not described herein again. Therefore, a signature hopping sequence of the terminal device on the 12 time-frequency resources is Sign= [S1 S2 S3 S4 S2 S2 S3 S1 S4 S4 S1 S3].

In this implementation, when the quantity of terminal devices is an integer multiple of a quantity of configurable signature sequences, each signature sequence corresponds to $Np$ sequence numbers, so that a same quantity of terminal devices are configured for each signature sequence. In this way, a centralized collision of signature sequences is avoided, a degree of distinguishing between terminal devices by using the signature sequences is improved, and decoding performance of a receive end (for example, the network device) is improved.

In another possible implementation, the first sequence number and the second sequence number satisfy the following formula:

$$Sn = mod(S1, Ns) + 1$$

$Sn$ is the second sequence number, mod is a modulo operation, $S1$ is the first sequence number, and $Ns$ is the quantity of signature sequences in the signature sequence set.

In this implementation, the correspondence between the sequence number and the signature sequence is determined in a modulo manner. When the quantity of terminal devices is an integer multiple of the quantity of signature sequences in the signature sequence set, a quantity of terminal devices corresponding to each signature sequence is equal. When the quantity of terminal devices is not an integer multiple of the quantity of signature sequences in the signature sequence set, a difference between quantities of terminal devices corresponding to any two signature sequences is less than or equal to 1. This can avoid a centralized collision of signature sequences, improve a degree of distinguishing between terminal devices by using the signature sequences, and improve decoding performance of a receive end (for example, the network device).

603: The network device determines a first sequence number of the terminal device on a first time-frequency resource.

604: The network device determines, from a signature sequence set, a first signature sequence corresponding to the first sequence number.

It may be understood that for a specific implementation in which the network device determines the first sequence number and the first signature sequence, refer to specific descriptions of determining, by the terminal device, the first sequence number and the first signature sequence in step 601 and step 602. Details are not described herein again.

It may be understood that the network device and the terminal device have a consistent understanding of the first sequence number and the first signature sequence. To be specific, the first sequence number determined by the network device is the same as the first sequence number determined by the terminal device, and the first signature sequence determined by the network device is the same as the first signature sequence determined by the terminal device. Alternatively, the network device and the terminal device determine the first sequence numbers and the first signature sequences in a same manner (for example, a same random algorithm).

605: The terminal device sends data on the first time-frequency resource by using the first signature sequence. Correspondingly, the network device receives the data from the terminal device on the first time-frequency resource.

It may be understood that step 605 may be performed after step 603 and step 604, or may be performed before step 603 and step 604. To be specific, after receiving the data from the terminal device on the first time-frequency resource, the network device may determine the first signature sequence used by the terminal device on the first time-frequency resource. Alternatively, the network device may first determine the first signature sequence used by the terminal device on the first time-frequency resource, and then receive the data from the terminal device on the first time-frequency resource. This is not limited in this application.

606: The network device decodes the data based on the first signature sequence.

For example, the network device may further receive, on the first time-frequency resource, data sent by another terminal device in the terminal device set. The network device separately determines a signature sequence corresponding to each terminal device in the terminal device set on the first time-frequency resource, and decodes the received data based on the signature sequence corresponding to each terminal device.

In this embodiment of this application, the terminal device may alternatively send data based on a signature sequence pattern. In other words, the signature sequence may be replaced with a signature sequence pattern, and the signature sequence set may be replaced with a signature sequence pattern set. For example, after determining the first sequence number, the terminal device may determine, from the signature sequence pattern set, a first signature sequence pattern corresponding to the first sequence number, and send the data on the first time-frequency resource by using the first signature sequence pattern. For ease of description, the following describes embodiments of this application by using a signature sequence as an example.

In this embodiment of this application, on the first time-frequency resource, one terminal device corresponds to one sequence number, and the sequence number corresponds to a signature sequence. One signature sequence corresponds to one or more sequence numbers. A correspondence between a sequence number and a signature sequence enables a quantity of sequence numbers corresponding to each signature sequence in the signature sequence set to be less than or equal to the first value. Therefore, a quantity of terminal devices that select the first signature sequence on the first time-frequency resource can be effectively limited, a centralized collision of signature sequences can be avoided, a degree of distinguishing between terminal devices by using the signature sequences can be improved, and decoding performance of a receive end (for example, the network device) can be improved. In addition, in this embodiment of this application, a case in which only a small quantity of terminal devices select the first signature sequence can be further avoided. In this way, a waste of resources is avoided.

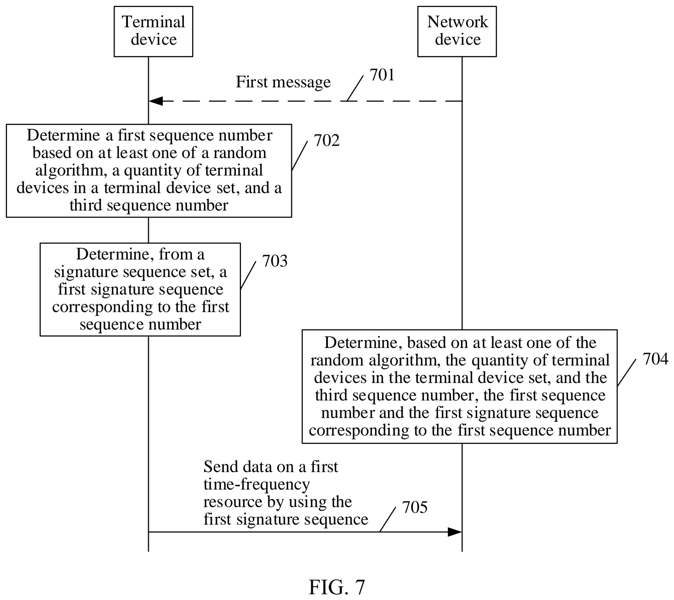

FIG. 7 is a diagram of interaction of another data transmission method according to an embodiment of this application. As shown in FIG. 7, the method includes but is not limited to the following steps.

701: A network device sends a first message. Correspondingly, a terminal device receives the first message.

For example, the first message indicates at least one of a signature sequence set, a time-frequency resource set, and a random algorithm. The signature sequence set is a set that is configured by the network device for the terminal device and that is of signature sequences that can be used by the terminal device. For example, the terminal device sends data on any time-frequency resource in the time-frequency resource set by using a signature sequence in the signature sequence set. The random algorithm is used to determine a signature sequence used by the terminal device on each time-frequency resource in the time-frequency resource set.

For example, the first message may be carried by using radio resource control (radio resource control, RRC) signaling. The network device may broadcast the first message.

702: The terminal device determines a first sequence number based on at least one of the random algorithm, a quantity of terminal devices in a terminal device set, and a third sequence number, where the third sequence number is a sequence number of the terminal device on a second time-frequency resource, the terminal device in the terminal device set transmits data on the second time-frequency resource, and the second time-frequency resource is different from a first time-frequency resource.

For example, the random algorithm may be indicated by the first message. For example, the network device may determine, for the terminal device, the random algorithm used for the first sequence number. The terminal device generates the first sequence number based on the random algorithm, so that the first sequence number is random.

For example, the random algorithm may include an interleaver, for example, an S-random interleaver, a Welch-Costas interleaver, a golden interleaver, a multidimensional interleaver, a row-column interleaver, and a linear congruential interleaver.

For example, the random algorithm may be a pseudo-random algorithm. When indicating the random algorithm to the terminal device, the network device may further indicate an initial value. The first sequence number may be obtained through calculation by using the initial value and the random algorithm. The first sequence number may be a pseudo-random number, so that the first sequence number is random.

It may be understood that the foregoing random algorithm may alternatively be replaced with an algorithm, a pseudo-random algorithm, or the like. The foregoing random algorithm is merely a name of an algorithm that enables the generated first sequence number to be random in this application. The name of the algorithm that enables the generated first sequence number to be random is not limited in this application.

For example, the terminal device in the terminal device set transmits data on the time-frequency resource set, and the time-frequency resource set includes the first time-frequency resource and the second time-frequency resource. To be specific, when allocating a time-frequency resource to the terminal device in the terminal device set, the network device allocates the time-frequency resource set to each terminal device in the terminal device set, so that each terminal device in the terminal device set can transmit data on the time-frequency resource set. The first time-frequency resource and the second time-frequency resource are any two time-frequency resources in the time-frequency resource set.

For example, the first time-frequency resource and the second time-frequency resource are continuous in time domain or frequency domain. It may be understood that the time-frequency resource set may be referred to as a time-frequency resource pool, and the first time-frequency resource or the second time-frequency resource may be a time-frequency resource block, a time-frequency resource area, or a time-frequency resource unit in the time-frequency resource pool. For example, the first time-frequency resource or the second time-frequency resource may include one or more frequency domain units and one or more time domain units. The frequency domain unit may include a subchannel or a subcarrier, and the time domain unit may include a slot or an orthogonal frequency division multiplexing (orthogonal frequency division multiplexing, OFDM) symbol. For example, a quantity of frequency domain units included in the first time-frequency resource and a quantity of frequency domain units included in the second time-frequency resource are equal, or a quantity of time domain units included in the first time-frequency resource and a quantity of time domain units included in the second time-frequency resource are equal.

For example, the terminal device may determine a sequence number of the terminal device on the first time-frequency resource based on the sequence number of the terminal device on the second time-frequency resource, that is, determine the first sequence number in an iteration manner.

For example, the terminal device may determine a value range of the first sequence number based on the quantity of terminal devices in the terminal device set. For example, a value of the first sequence number is less than or equal to the quantity of terminal devices. Each terminal device in the terminal device set corresponds to one sequence number, and a value of a sequence number corresponding to any terminal device in the terminal device set is less than or equal to the quantity of terminal devices.

703: The terminal device determines, from the signature sequence set, a first signature sequence corresponding to the first sequence number.

It may be understood that for a specific implementation of step 703, refer to a specific implementation of step 602 in FIG. 6. Details are not described herein again.

704: The network device determines, based on at least one of the random algorithm, the quantity of terminal devices in the terminal device set, and the third sequence number, the first sequence number and the first signature sequence corresponding to the first sequence number.

It may be understood that for a specific implementation in which the network device determines the first sequence number and the first signature sequence, refer to a specific implementation in which the terminal device determines the first sequence number and the first signature sequence. Details are not described herein again.

705: The terminal device sends data on the first time-frequency resource by using the first signature sequence. Correspondingly, the network device receives the data on the first time-frequency resource.

For example, after receiving the data on the first time-frequency resource, the network device decodes the received data by using the first signature sequence.

In this embodiment of this application, in one time-frequency resource, the terminal devices in the terminal device set may be divided into a plurality of terminal device groups, terminal devices in each terminal device group use a same signature sequence (or signature sequence pattern) to send data, and terminal devices in any two terminal device groups use different signature sequences (or signature sequence patterns). A quantity of terminal device groups may be less than or equal to a quantity of signature sequences in the signature sequence set. To ensure randomness of a hopping sequence, out-of-order rearrangement may be performed on the terminal devices in the terminal device set by using the foregoing random algorithm (for example, an interleaver), to determine terminal devices in different terminal device groups.

In this embodiment of this application, on the first time-frequency resource, one terminal device corresponds to one sequence number, and the sequence number corresponds to a signature sequence. The terminal device and the network device may each determine the first sequence number based on at least one of the random algorithm, the quantity of terminal devices, and the third sequence number, so that the first sequence number can be more properly determined, and randomness of the first sequence number can be ensured. In this way, the first signature sequence is random, a degree of distinguishing between terminal devices by using the signature sequences is improved, and decoding performance of a receive end (for example, the network device) is improved.

For example, for step 702 in which the terminal device determines the first sequence number based on at least one of the random algorithm, the quantity of terminal devices in the terminal device set, and the third sequence number, this embodiment of this application further provides the following several implementations:

Implementation 1: The terminal device generates a first random sequence based on the random algorithm and the quantity of terminal devices in the terminal device set, where a length of the first random sequence is greater than or equal to the quantity of terminal devices; and determines the first sequence number based on a second random sequence and the third sequence number, where the second random sequence is determined based on the first random sequence.

For example, the random algorithm includes at least one of a Fisher-Yates shuffle algorithm, a Sattolo shuffle algorithm, an S-random interleaver, a Welch-Costas interleaver, a golden interleaver, and a multidimensional interleaver.

For example, any two elements in the first random sequence are different. An element in the first random sequence is random, or a location of the element in the first random sequence is random. For example, the first random sequence includes N elements, which are respectively 0, 1, 2, 3, ..., and N-1. N is equal to the quantity of terminal devices. The N elements are randomly arranged in the first random sequence.

It may be understood that the first random sequence may be replaced with an interleaved sequence, a random interleaved sequence, a first sequence, or the like. The first random sequence is merely a name of a sequence that includes a random element or an element with a random location in this application. The name of the sequence that includes a random element or an element with a random location is not limited in this application.

For example, a length of the second random sequence is equal to the length of the first random sequence, an element in the second random sequence is determined based on the first random sequence, and a location of the element in the second random sequence is random. It may be understood that the second random sequence may be replaced with an inverse interleaved sequence, a pseudo-random sequence, a second sequence, or the like.

In a possible implementation, the second random sequence may be an inverse sequence of the first random sequence, and the first random sequence and the second random sequence satisfy the following formula:

$$\pi^{-1}\big(\pi(a)\big) = a$$

$\pi$ is the first random sequence, $\pi^{-1}$ is the second random sequence, a is a positive integer less than or equal to N, N1 is the length of the first random sequence, and N1 is a positive integer. The terminal device may determine the second random sequence based on the first random sequence according to the foregoing formula.

For example, Table 2 is an example of the first random sequence and the second random sequence. As shown in Table 2, the length of the first random sequence and the length of the second random sequence are both N1=12. When a=0, $\pi(0)$ is 7, and $\pi^{-1}(7)=0$; and $\pi(5)=0$, and $\pi^{-1}(0)=5$.

Table 2

| Sequence number | 0 | 1 | 2 | 3 | 4 | 5 | 6 | 7 | 8 | 9 | 10 | 11 |
|---|---|---|---|---|---|---|---|---|---|---|---|---|
| First random sequence $\pi$ | 7 | 9 | 8 | 4 | 11 | 0 | 5 | 1 | 3 | 10 | 2 | 6 |

(continued)

| Sequence number | 0 | 1 | 2 | 3 | 4 | 5 | 6 | 7 | 8 | 9 | 10 | 11 |
|---|---|---|---|---|---|---|---|---|---|---|---|---|
| Second random sequence $\pi^{-1}$ | 5 | 7 | 10 | 8 | 3 | 6 | 11 | 0 | 2 | 1 | 9 | 4 |

It may be understood that the first random sequence and the second random sequence shown in Table 2 are merely examples, and the first random sequence and the second random sequence shown in Table 2 should not be understood as a limitation on this application.

After determining the second random sequence, the terminal device may determine the first sequence number based on the second random sequence and the third sequence number. For example, the terminal device may determine the first sequence number according to the following formula:

$$S1 = \pi^{-1}(S2)$$

$\pi^{-1}$ is the second random sequence, S1 is the first sequence number, and S2 is the third sequence number. For example, if the third sequence number is 0, based on the second random sequence shown in Table 2, $S1=\pi^{-1}(0)=5$; or if the third sequence number is 0, based on the second random sequence shown in Table 2, $S1=\pi^{-1}(5)=6$.

In this embodiment of this application, the second time-frequency resource and the first time-frequency resource are included in the time-frequency resource set, and the terminal device may determine a sequence number of each time-frequency resource in the time-frequency resource set in an iteration manner. For example, the terminal device may initialize a sequence number corresponding to a 1st time-frequency resource in the time-frequency resource set, and determine a sequence number of the terminal device on a 2nd time-frequency resource based on the sequence number on the 1st time-frequency resource. It may be understood that when the first time-frequency resource is the 1st time-frequency resource in the time-frequency resource set, the terminal device does not need to determine the first sequence number based on the second random sequence and the third sequence number. For example, after initializing the sequence number corresponding to the 1st time-frequency resource, the terminal device may determine the first sequence number.

In some possible implementations, all terminal devices in the terminal device set transmit data on a time-frequency resource in the time-frequency resource set, and sequence numbers of the terminal devices in the terminal device set on a same time-frequency resource are different.

For example, the terminal device may arrange the terminal devices in the terminal device set on each time-frequency resource in the time-frequency resource set, and a sequence number of the terminal device is a location (or an index) of the terminal device in the terminal device set.

For example, the terminal device may initialize sequence numbers of the terminal devices in the terminal device set on the 1st time-frequency resource in the time-frequency resource set. For example, the terminal device may initialize an order of the terminal devices corresponding to the 1st time-frequency resource in the time-frequency resource set, and then determine, based on the order of the terminal devices on the 1st time-frequency resource, an order of the terminal devices on another time-frequency resource in the time-frequency resource set.

For example, if the quantity of terminal devices in the terminal device set is 12, on the 1st time-frequency resource, sequence numbers corresponding to the 12 terminal devices (where user identities (identities, IDs) are respectively a UE 1 to a UE 12) included in the terminal device set may be shown in Table 3. Table 3 further shows a correspondence between a sequence number of a terminal device and a signature sequence. For example, the signature sequence set includes four signature sequences (which are respectively a signature sequence S1, a signature sequence S2, a signature sequence S3, and a signature sequence S4). Sequence numbers corresponding to the signature sequence S1 are 0 to 2, sequence numbers corresponding to the signature sequence S2 are 3 to 5, sequence numbers corresponding to the signature sequence S3 are 6 to 8, and sequence numbers corresponding to the signature sequence S4 are 9 to 11. As shown in Table 3, a sequence number of the UE 1 on the 1st time-frequency resource in the time-frequency resource set is 0, and a corresponding signature sequence is the signature sequence S1. A sequence number of the UE 2 on the 1st time-frequency resource in the time-frequency resource set is 1, and a corresponding signature sequence is the signature sequence S1.

Table 3

| | Signature sequence S1 | | | Signature sequence S2 | | | Signature sequence S3 | | | Signature sequence S4 | | |
|---|---|---|---|---|---|---|---|---|---|---|---|---|
| Sequence number | 0 | 1 | 2 | 3 | 4 | 5 | 6 | 7 | 8 | 9 | 10 | 11 |
| User ID | UE 1 | UE 2 | UE 3 | UE 4 | UE 5 | UE 6 | UE 7 | UE 8 | UE 9 | UE 10 | UE 11 | UE 12 |

For example, the terminal device may initialize, based on an indication of the network device, the sequence numbers corresponding to the terminal devices in the terminal device set on the 1st time-frequency resource. For example, the first message includes the sequence numbers corresponding to the terminal devices in the terminal device set on the 1st time-frequency resource.

For example, after initializing the sequence numbers of the terminal devices in the terminal device set on the 1st time-frequency resource, the terminal device determines sequence numbers of the terminal devices on the 2nd time-frequency resource in the time-frequency resource set based on the second random sequence and the sequence numbers of the terminal devices on the 1st time-frequency resource.

For example, the second random sequence may be shown in Table 2. When the quantity of terminal devices in the terminal device set is 12, and the time-frequency resource set includes at least 13 time-frequency resources, sequence numbers of the terminal devices in the terminal device set on time-frequency resources may be shown in Table 4. For example, a sequence number of a UE 1 on the 1st time-frequency resource (that is, a time-frequency resource 1) is 0, and a sequence number of the UE 1 on a time-frequency resource 2 is 5. A sequence number of a UE 2 on the time-frequency resource 1 is 1, and a sequence number of the UE 2 on the time-frequency resource 2 is 7. Table 4 further shows a signature sequence corresponding to each terminal device in the terminal device set on each time-frequency resource. The terminal device may determine, based on Table 4, a signature hopping sequence of the terminal device on a plurality of time-frequency resources in the time-frequency resource set. For example, a signature hopping sequence of the UE 1 on the first 12 time-frequency resources is Sign(UE 1)=[S1 S2 S3 S4 S2 S2 S3 S1 S4 S4 S1 S3].

Table 4

| | Signature sequence S1 | | | Signature sequence S2 | | | Signature sequence S3 | | | Signature sequence S4 | | |
|---|---|---|---|---|---|---|---|---|---|---|---|---|
| Sequence number | 0 | 1 | 2 | 3 | 4 | 5 | 6 | 7 | 8 | 9 | 10 | 11 |
| Time-frequency resource 1 | UE 1 | UE 2 | UE 3 | UE 4 | UE 5 | UE 6 | UE 7 | UE 8 | UE 9 | UE 10 | UE 11 | UE 12 |
| Time-frequency resource 2 | UE 8 | UE 10 | UE 9 | UE 5 | UE 12 | UE 1 | UE 6 | UE 2 | UE 4 | UE 11 | UE 3 | UE 7 |
| Time-frequency resource 3 | UE 2 | UE 11 | UE 4 | UE 12 | UE 7 | UE 8 | UE 1 | UE 10 | UE 5 | UE 3 | UE 9 | UE 6 |
| Time-frequency resource 4 | UE 10 | UE 3 | UE 5 | UE 7 | UE 6 | UE 2 | UE 8 | UE 11 | UE 12 | UE 9 | UE 4 | UE 1 |
| Time-frequency resource 5 | UE 11 | UE 9 | UE 12 | UE 6 | UE 1 | UE 10 | UE 2 | UE 3 | UE 7 | UE 4 | UE 5 | UE 8 |
| Time-frequency resource 6 | UE 3 | UE 4 | UE 7 | UE 1 | UE 8 | UE 11 | UE 10 | UE 9 | UE 6 | UE 5 | UE 12 | UE 2 |
| Time-frequency resource 7 | UE 9 | UE 5 | UE 6 | UE 8 | UE 2 | UE 3 | UE 11 | UE 4 | UE 1 | UE 12 | UE 7 | UE 10 |

(continued)

| | Signature sequence S1 | | | Signature sequence S2 | | | Signature sequence S3 | | | Signature sequence S4 | | |
|---|---|---|---|---|---|---|---|---|---|---|---|---|
| Sequence number | 0 | 1 | 2 | 3 | 4 | 5 | 6 | 7 | 8 | 9 | 10 | 11 |
| Time-frequency resource 8 | UE 4 | UE 12 | UE 1 | UE 2 | UE 10 | UE 9 | UE 3 | UE 5 | UE 8 | UE 7 | UE 6 | UE 11 |
| Time-frequency resource 9 | UE 5 | UE 7 | UE 8 | UE 10 | UE 11 | UE 4 | UE 9 | UE 12 | UE 2 | UE 6 | UE 1 | UE 3 |
| Time-frequency resource 10 | UE 12 | UE 6 | UE 2 | UE 11 | UE 3 | UE 5 | UE 4 | UE 7 | UE 10 | UE 1 | UE 8 | UE 9 |
| Time-frequency resource 11 | UE 7 | UE 1 | UE 10 | UE 3 | UE 9 | UE 12 | UE 5 | UE 6 | UE 11 | UE 8 | UE 2 | UE 4 |
| Time-frequency resource 12 | UE 6 | UE 8 | UE 11 | UE 9 | UE 4 | UE 7 | UE 12 | UE 1 | UE 3 | UE 2 | UE 10 | UE 5 |
| Time-frequency resource 13 | UE 1 | UE 2 | UE 3 | UE 4 | UE 5 | UE 6 | UE 7 | UE 8 | UE 9 | UE 10 | UE 11 | UE 12 |

It can be learned from Table 4 that sequence numbers of the terminal devices (for example, the UE 1 to the UE 12) in the terminal device set on the time-frequency resource 1 are the same as sequence numbers of the terminal devices on the time-frequency resource 13. Therefore, sequence numbers of the terminal devices in the terminal device set on the time-frequency resources are periodic, and a periodicity length is 12. Based on a correspondence between a sequence number and a signature sequence, a signature hopping sequence of each terminal device in the terminal device set is a cyclic sequence whose periodicity is 12.

In this implementation, after the first random sequence is generated based on the random algorithm, the second random sequence is generated based on the first random sequence. After the second random sequence is generated, the first sequence number can be quickly determined based on the second random sequence and the third sequence number, so that data transmission efficiency can be improved.

For example, for the foregoing random algorithm and generation of the first random sequence, this embodiment of this application further provides the following several examples:

Example 1: The random algorithm includes a Fisher (Fisher)-Yates (Yates) shuffle (Shuffle) algorithm and a Sattolo (Sattolo) shuffle algorithm. In other words, the terminal device generates the first random sequence by using the Fisher-Yates shuffle algorithm or the Sattolo shuffle algorithm.

For example, the terminal device may traverse an original sequence in forward or reverse order by using the Fisher-Yates shuffle algorithm or the Sattolo shuffle algorithm, to generate the first random sequence. In other words, an element in the first random sequence is the same as an element in the original sequence, but a location of each element in the first random sequence is different from that in the original sequence.

For example, a sequence number j is randomly generated in each traversal in reverse order, and the sequence number is less than or equal to a sequence number i of a currently traversed element (for the Sattolo shuffle algorithm, the sequence number is less than the sequence number i of the currently traversed element), and an element corresponding to the sequence number i and an element corresponding to the sequence number j are exchanged, to generate the first random sequence. For another example, a sequence number j is randomly generated in each traversal in forward order, and the sequence number is greater than or equal to a sequence number i of a currently traversed element (for the Sattolo shuffle algorithm, the sequence number is greater than the sequence number i of the currently traversed element), and an element corresponding to the sequence number i and an element corresponding to the sequence number j are exchanged, to generate the first random sequence.

For example, a length of the original sequence may be the quantity of terminal devices in the terminal device set. For example, elements included in the original sequence may be (0, 1, 2, 3, ..., N-1), where N is the quantity of terminal devices.

For example, if the quantity of terminal devices is 12, the original sequence may be (0, 1, 2, 3, 4, 5, 6, 7, 8, 9, 10, 11), and the first random sequence generated by the terminal device by using the Fisher-Yates shuffle algorithm or the Sattolo shuffle algorithm may be (7, 9, 8, 4, 11, 0, 5, 1, 3, 10, 2, 6).

In this embodiment of this application, the terminal device may determine the first sequence number by using the Fisher-Yates shuffle algorithm or the Sattolo shuffle algorithm, to ensure randomness of the first sequence number. In this way, the first signature sequence is random, a degree of distinguishing between terminal devices by using the signature sequences is improved, and decoding performance of a receive end (for example, the network device) is improved.

Example 2: The random algorithm includes an S-random interleaver. In other words, the terminal device generates the first random sequence by using the S-random interleaver.

For example, the S-random (S-random) interleaver may also be referred to as an S interleaver or a spread (Spread) interleaver. In the S-random interleaver, one element of the first random sequence may be first determined, and a first random sequence whose length is N may be generated through N-1 iterations. A given parameter S>0. One random element is generated in each iteration process. If a distance between the random element and any element in previously generated S random elements is greater than S, the random element is added to the sequence; otherwise, a random element is regenerated until a condition is satisfied.

For example, in the S-random interleaver, a number is first randomly generated from 0 to N-1 as a 1st element $\pi(0)$ in the first random sequence. In an $i^{th}$ iteration process, a random element k is randomly generated from 0 to N-1, and k is different from any random element generated before the current iteration (that is, $k \notin \{\pi[0], \pi[1], ..., \pi[i-1]\}$). If differences between k and the previously generated S random elements are greater than S, k is added to the first random sequence, that is, $\pi(i)=k$. In other words, if there is no $l \in \{i-S, i-S+1, ..., i-1\}$ that enables a difference between k and $\pi[l]$ to be less than or equal to S, k is added to the first random sequence. If there is $l \in \{i-S, i-S+1, ..., i-1\}$ that enables a difference between k and $\pi[l]$ to be less than or equal to S, a random element k is regenerated until the generated random element k satisfies a condition, and the random element that satisfies the condition is added to the first random sequence.

Example 3: The foregoing random algorithm includes a Welch (Welch)-Costas (Costas) interleaver. In other words, the terminal device may generate the first random sequence by using the Welch-Costas interleaver.

For example, the terminal device may calculate an $n^{th}$ element in the first random sequence according to the following formula:

$$\pi(n) = \mathrm{mod}\left[a^{\pi'(n)+1}, p\right]$$

N is the quantity of terminal devices, $0 \le n \le N-1$, $p = N+1$, and selection of the element a needs to satisfy that $a^0$, $a^1$, $a^2$, ... are different after a modulo operation is performed on the parameter p. The interleaver $\pi'(n)$ may be generated by using a linear congruential interleaver.

Example 4: The foregoing random algorithm includes a golden (Golden) interleaver. In other words, the terminal device may generate the first random sequence by using the golden interleaver.

For example, the terminal device may first determine an $n^{th}$ element in a third sequence based on the quantity of terminal devices:

$$v(n) = \mathrm{mod}[n \cdot c + d(n), N], n = 0, 1, 2, ..., N-1$$

$$c = N \cdot (g^m + j)/r$$

N is the quantity of terminal devices, m, j, and r are any positive integers, g is a golden section rate (that is, g = 0.618), and d(n) is a random interference item in an interval $[0, 0.01 \cdot N]$. For example, the random interference item of the golden interleaver may be indicated by the network device. For example, the network device may broadcast a random seed to a terminal device in a network.

For example, the terminal device arranges the third sequence (for example, arranges the third sequence in ascending order or descending order), and an $n^{th}$ element in the first random sequence is a location (or a sequence number, or an index, or a subscript) of the $n^{th}$ element in the third sequence after the $n^{th}$ element in the third sequence is arranged in ascending order or descending order. For example, the third sequence is (3, 5, 1, 0, 2). If arrangement is performed in ascending order, an arranged third sequence is (0, 1, 2, 3, 5), and a location of a first element in the third sequence in the arranged third sequence is 3, a 1st element in the first random sequence is 3.

Example 5: The foregoing random algorithm includes a multidimensional interleaver. In other words, the terminal device determines the first random sequence by using the multidimensional interleaver.

For example, the terminal device may generate the multidimensional interleaver based on the quantity of terminal devices. For example, the quantity N of terminal devices may be decomposed into the following form:

$$N = N_1 \times N_2 \times ... \times N_p$$

p > 1, and an interleaver $\pi$ whose interleaving length is N may be obtained by combining p interleavers $\pi_1, \pi_2, ... ,$ and $\pi_p$ whose interleaving lengths are respectively $N_1, N_2, ... ,$ and $N_p$. A construction process is as follows:
For any n $\in$ [0, N- 1], n is decomposed into:

$$n = n_1 + n_2 N_1 + n_3 N_1 N_2 + \cdots + n_p N_1 ... N_{p-1},$$

where

$$n_1 = \text{mod}(n, N1)$$

$$n_2 = \text{mod}\left(\left\lfloor \frac{n}{N_1} \right\rfloor, N_2\right)$$

$$\vdots$$

$$n_p = \text{mod}\left(\left\lfloor \frac{n}{N_1 ... N_{p-1}} \right\rfloor, N_p\right)$$

The interleaver is constructed according to the following formula:

$$\pi(n) = \sum_{i=1}^{p} \pi_{\Pi(i)}(n_{\Pi(i)}) \prod_{j=1}^{i-1} N_{\Pi}(j)$$

$$\Pi = [1\ 2\ ... \ p].$$

For example, when $N = N_1 \times N_2$, there may be $n = n_1 + n_2 N_1$, where $n_1$ and $n_2$ may be determined according to the following formulas:

$$n_1 = \text{mod}(n, N1)$$

$$n_2 = \text{mod}\left(\left\lfloor \frac{n}{N_1} \right\rfloor, N_2\right)$$

The following interleavers may be generated by using a linear congruential interleaver:

$$\pi_1(n_1) = \text{mod}(p_1 N_1 + s_1, N_1)$$

$$\pi_2(n_2) = \text{mod}(p_2 N_2 + s_2, N_2)$$

The foregoing two interleavers are combined to generate a multidimensional interleaver: $\pi(n) = \pi_2(n_2) + \pi_1(n_1)N_2$. For example, the first random sequence may be generated by using the multidimensional interleaver.
Implementation 2: The first sequence number is determined based on the random algorithm, the quantity of terminal devices, the third sequence number, and the quantity of signature sequences in the signature sequence set.
For example, the foregoing random algorithm may include a row-column interleaver. In this implementation, the terminal device may arrange the terminal devices in the terminal device set into an (Ns×N/Ns) matrix with Ns rows and N/Ns columns. On the second time-frequency resource, user IDs of the terminal devices in the terminal device set are written row by row and read column by column in an order of sequence numbers of the terminal devices in the terminal device set, to obtain the sequence numbers of the terminal devices on the first time-frequency resource.

For example, when N=12 and Ns=4, the terminal device may arrange sequence numbers of the terminal devices in the terminal device set on a time-frequency resource t = 1, as shown in Table 3, and rearrange user IDs of the terminal devices in the terminal device set as a 4 × 3 matrix in a row-by-row writing manner. The matrix is as follows:

$$\begin{bmatrix} 1 & 5 & 9 \\ 2 & 6 & 10 \\ 3 & 7 & 11 \\ 4 & 8 & 12 \end{bmatrix}$$

In the foregoing matrix, 1 to 12 respectively represent user IDs of a UE 1 to a UE 12. Then, the user IDs are read column by column. User IDs and sequence numbers corresponding to the user IDs obtained through rearrangement on a time-frequency resource t = 2 may be obtained.

Then, the terminal device may further rearrange the user IDs on the time-frequency resource t = 2 as a 4 × 3 matrix in a row-by-row writing manner:

$$\begin{bmatrix} 1 & 6 & 11 \\ 5 & 10 & 4 \\ 9 & 3 & 8 \\ 2 & 7 & 12 \end{bmatrix}$$

Then, the user IDs are read column by column. User IDs and sequence numbers corresponding to the user IDs obtained through rearrangement on a time-frequency resource t = 3 may be obtained.

In a possible implementation, the first sequence number, the third sequence number, the quantity of terminal devices, and the quantity of signature sequences satisfy the following formulas:

$$S2 = Ns * a + b$$

$$S1 = N/Ns * b + a$$

S2 is the third sequence number, Ns is the quantity of signature sequences in the signature sequence set, a is a quotient of S2 divided by Ns, b is a remainder of S2 divided by Ns, S1 is the first sequence number, and N is the quantity of terminal devices. In other words, the terminal device may determine the parameter a and the parameter b based on the sequence number on the second time-frequency resource and the quantity of signature sequences in the signature sequence set, and then determine the sequence number on the first time-frequency resource based on the parameter a and the parameter b. For example, if N=12, Ns=4, and S2=1, a=floor(S2/Ns)=0, b=mod(S2, Ns)=1, and S1=12/4*1+0=3 may be obtained through calculation.

In this implementation, sequence numbers and signature sequences that correspond to the terminal devices in the terminal device set on a plurality of time-frequency resources may be determined according to the foregoing formulas. For example, allocation of sequence numbers and signature sequences of the terminal devices in the terminal device set on the time-frequency resource 1, the time-frequency resource 2, and the time-frequency resource 3 may be shown in Table 5. In other words, in this implementation, after the terminal devices in the terminal device set are rearranged based on a row-column interleaving manner, values of the sequence numbers of the terminal devices may start from 0. In other words, a sequence number corresponding to a terminal device that ranks first in the terminal device set is 0.

Table 5

| | Signature sequence S1 | | | Signature sequence S2 | | | Signature sequence S3 | | | Signature sequence S4 | | |
|---|---|---|---|---|---|---|---|---|---|---|---|---|
| Sequence number | 0 | 1 | 2 | 3 | 4 | 5 | 6 | 7 | 8 | 9 | 10 | 11 |
| Time-fre-quency re-source 1 | UE 1 | UE 2 | UE 3 | UE 4 | UE 5 | UE 6 | UE 7 | UE 8 | UE 9 | UE 10 | UE 11 | UE 12 |

(continued)

| | Signature sequence S1 | | | Signature sequence S2 | | | Signature sequence S3 | | | Signature sequence S4 | | |
|---|---|---|---|---|---|---|---|---|---|---|---|---|
| Sequence number | 0 | 1 | 2 | 3 | 4 | 5 | 6 | 7 | 8 | 9 | 10 | 11 |
| Time-frequency resource 2 | UE 1 | UE 5 | UE 9 | UE 2 | UE 6 | UE 10 | UE 3 | UE 7 | UE 11 | UE 4 | UE 8 | UE 12 |
| Time-frequency resource 3 | UE 1 | UE 6 | UE 11 | UE 5 | UE 10 | UE 4 | UE 9 | UE 3 | UE 8 | UE 2 | UE 7 | UE 12 |

In another possible implementation, the foregoing random algorithm includes a row-column interleaver, and the first sequence number, the third sequence number, the quantity of terminal devices, and the quantity of signature sequences satisfy the following formulas:

$$a = \text{ceil}(S2/Ns)$$

$$b = \text{mod}(S2-1, Ns) + 1$$

$$S1 = N/Ns * (b-1) + a$$

S2 is the third sequence number, N is the quantity of terminal devices, Ns is the quantity of signature sequences, ceil is rounding up, and mod is a modulo operation. In other words, the terminal device may determine the parameter a and the parameter b based on the sequence number on the second time-frequency resource and the quantity of signature sequences in the signature sequence set, and then determine the sequence number on the first time-frequency resource based on the parameter a and the parameter b. For example, if N=12, Ns=4, and S2=2, a=1 and b=2 may be obtained through calculation. In this case, S1=12/4*1+1=4. For another example, if N=12, Ns=4, and S2=3, a=1 and b=3 may be obtained through calculation. In this case, S1=12/4*2+1=3.

In this implementation, sequence numbers and signature sequences that correspond to the terminal devices in the terminal device set on a plurality of time-frequency resources may be determined according to the foregoing formulas. For example, allocation of sequence numbers and signature sequences of the terminal devices in the terminal device set on the time-frequency resource 1, the time-frequency resource 2, and the time-frequency resource 3 may be shown in Table 6. In other words, in this implementation, after the terminal devices in the terminal device set are rearranged based on a row-column interleaving manner, values of the sequence numbers of the terminal devices may start from 1. In other words, a sequence number corresponding to a terminal device that ranks first in the terminal device set is 1.

Table 6

| | Signature sequence S1 | | | Signature sequence S2 | | | Signature sequence S3 | | | Signature sequence S4 | | |
|---|---|---|---|---|---|---|---|---|---|---|---|---|
| Sequence number | 1 | 2 | 3 | 4 | 5 | 6 | 7 | 8 | 9 | 10 | 11 | 12 |
| Time-frequency resource 1 | UE 1 | UE 2 | UE 3 | UE 4 | UE 5 | UE 6 | UE 7 | UE 8 | UE 9 | UE 10 | UE 11 | UE 12 |
| Time-frequency resource 2 | UE 1 | UE 5 | UE 9 | UE 2 | UE 6 | UE 10 | UE 3 | UE 7 | UE 11 | UE 4 | UE 8 | UE 12 |
| Time-frequency resource 3 | UE 1 | UE 6 | UE 11 | UE 5 | UE 10 | UE 4 | UE 9 | UE 3 | UE 8 | UE 2 | UE 7 | UE 12 |

In this implementation, a calculation process can be simplified by using the row-column interleaver, and the first sequence number can be quickly determined, thereby improving data transmission efficiency.

Implementation 3: The first sequence number is determined based on the random algorithm, the quantity of terminal devices, the third sequence number, and a fourth sequence number. The fourth sequence number is a sequence number of the first time-frequency resource in the time-frequency resource set. Alternatively, the fourth sequence number is a location or an index of the first time-frequency resource in the time-frequency resource set.

In this implementation, the random algorithm includes a row-column interleaver. On a $t^{th}$ time-frequency resource (namely, the first time-frequency resource) in the time-frequency resource set, the terminal device may arrange the terminal devices in the terminal device set into a matrix with t rows and ceil(N/t) columns. For example, the second time-frequency resource may be a $1^{st}$ time-frequency resource in the time-frequency resource set. For example, user IDs of the terminal devices in the terminal device set may be written row by row and read column by column in an order of sequence numbers of the terminal devices in the terminal device set on the $1^{st}$ time-frequency resource in the time-frequency resource set, to obtain the sequence numbers of the terminal devices on the first time-frequency resource.

For example, if t=2, N=12, and Ns=4, the terminal device may arrange sequence numbers of the terminal devices in the terminal device set on a time-frequency resource t = 1, as shown in Table 3, and the terminal device arranges the terminal devices in the terminal device set into a matrix with two rows and six columns. The matrix may be as follows:

$$\begin{bmatrix} 1 & 3 & 5 & 7 & 9 & 11 \\ 2 & 4 & 6 & 8 & 10 & 12 \end{bmatrix}$$

Then, the user IDs are read column by column. User IDs and sequence numbers corresponding to the user IDs obtained through rearrangement on a time-frequency resource t = 2 may be obtained.

Then, the terminal device may further rearrange the user IDs on the time-frequency resource t = 2 as a $3 \times 4$ matrix in a row-by-row writing manner:

$$\begin{bmatrix} 1 & 4 & 7 & 10 \\ 2 & 5 & 8 & 11 \\ 3 & 6 & 9 & 12 \end{bmatrix}$$

Then, the user IDs are read column by column. User IDs and sequence numbers corresponding to the user IDs obtained through rearrangement on a time-frequency resource t = 3 may be obtained.

In this implementation, the first sequence number, the quantity of terminal devices, the third sequence number, and the fourth sequence number satisfy the following formulas:

$$c = \mathrm{ceil}(S2/t)$$

$$d = \mathrm{mod}(S2-1, t) + 1$$

$$NR = \mathrm{mod}(N-1, t) + 1$$

$$S1 = \begin{cases} \mathrm{ceil}(N/t) * (d-1) + c, & d \le NR + 1 \\ [\mathrm{ceil}(N/t)-1] * (d-1) + NR + c, & d > NR + 1 \end{cases}$$

S2 is the third sequence number, t is the fourth sequence number, S1 is the first sequence number, ceil is rounding up, N is the quantity of terminal devices, mod is a modulo operation, and Ns is the quantity of signature sequences in the signature sequence set. In other words, the terminal device may determine the first sequence number according to the foregoing formulas. For example, on a $2^{nd}$ time-frequency resource (that is, t=2), if N=12, Ns=4, and S2=2, c=1, d=2, NR=2, and S1=6*1+1=7.

In this implementation, the terminal device may determine sequence numbers and corresponding signature sequences of the terminal devices in the terminal device set according to the foregoing formulas. For example, for terminal devices in the terminal device set, allocation of sequence numbers and signature sequences of the terminal devices in the terminal device set on the time-frequency resource 1, the time-frequency resource 2, and the time-frequency resource 3 may be shown in Table 7.

Table 7

|  | Signature sequence S1 | | | Signature sequence S2 | | | Signature sequence S3 | | | Signature sequence S4 | | |
|---|---|---|---|---|---|---|---|---|---|---|---|---|
| Sequence number | 1 | 2 | 3 | 4 | 5 | 6 | 7 | 8 | 9 | 10 | 11 | 12 |
| Time-fre-quency re-source 1 | UE 1 | UE 2 | UE 3 | UE 4 | UE 5 | UE 6 | UE 7 | UE 8 | UE 9 | UE 10 | UE 11 | UE 12 |
| Time-fre-quency re-source 2 | UE 1 | UE 3 | UE 5 | UE 7 | UE 9 | UE 11 | UE 2 | UE 4 | UE 6 | UE 8 | UE 10 | UE 12 |
| Time-fre-quency re-source 3 | UE 1 | UE 4 | UE 7 | UE 10 | UE 2 | UE 5 | UE 8 | UE 11 | UE 3 | UE 6 | UE 9 | UE 12 |

In this implementation, a calculation process can be simplified by using the row-column interleaver, and the first sequence number can be quickly determined, thereby improving data transmission efficiency.

Implementation 4: The random algorithm includes a linear congruential interleaver, and the first sequence number, the third sequence number, and the quantity of terminal devices satisfy the following formula:

$$S1 = \mod(S2 * p + s, N)$$

S1 is the first sequence number, S2 is the third sequence number, mod is a modulo operation, N is the quantity of terminal devices, p and N are relatively prime, and s is any positive integer.

In this implementation, a calculation process can be simplified by using the linear congruential interleaver, and the first sequence number can be quickly determined, thereby improving data transmission efficiency.

In this embodiment of this application, block-error rate (block-error rate, BLER) performance of a signature hopping sequence of the terminal device that is determined by using the foregoing random algorithm may be determined in a simulation manner. The random algorithm includes the Fisher-Yates shuffle algorithm, the Sattolo shuffle algorithm, the S-random interleaver, the Welch-Costas interleaver, the golden interleaver, the multidimensional interleaver, the linear congruential interleaver, or the row-column interleaver.

A NOMA solution used for simulation is MUSA6F1L. To be specific, each user uses a MUSA signature sequence whose sequence length is 6, and transmitted data includes only one layer. A specific simulation parameter configuration is shown in Table 8.

Table 8

|  | Antenna configuration | Channel | Quantity of activated users | Quantity of potential users | Quantity of bytes | Bandwidth | NOMA solution |
|---|---|---|---|---|---|---|---|
| Parameter | 1T4R | TDLA30 | 57 | 192 | 20 bytes | 8 RB | MUSA6F1L |

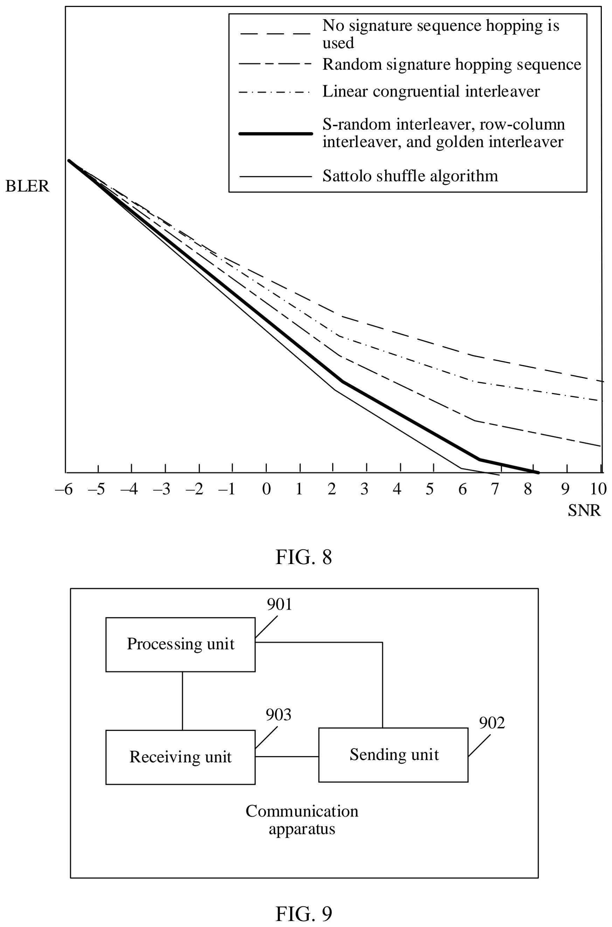

For example, a simulation result may be shown in FIG. 8. A dashed line represents BLER performance when a terminal device does not use a signature sequence hopping manner, and a long dash-short dash line represents BLER performance when the terminal device uses the random signature sequence hopping manner. It can be learned from FIG. 8 that the BLER performance when the terminal device uses the random signature sequence hopping manner is better than the BLER performance when the terminal device does not use the signature sequence hopping manner, and performance gains of about 5 dB can be achieved.

Remaining curves (for example, a thick solid line, a thin solid line, and a short dash-dotted line) in FIG. 8 show BLER performance corresponding to several interleavers provided in this embodiment of this application. It can be learned from FIG. 8 that BLER performance when the terminal device uses an S-random interleaver, a row-column interleaver, a golden interleaver, and a Sattolo shuffle algorithm is better than BLER performance when the terminal device uses the random signature sequence hopping manner, and performance gains of about 2 dB is achieved. An interleaved sequence constructed based on the Sattolo shuffle algorithm forms a single ring in a sequence number rearrangement process, so that a hopping periodicity is long, thereby ensuring randomness of a hopping sequence. For example, when a network includes 12 terminal devices, the interleaved sequence constructed based on the Sattolo shuffle algorithm is shown in Table 2, and an included ring is $0 \to 7 \to 1 \to 9 \to 10 \to 2 \to 8 \to 3 \to 4 \to 11 \to 6 \to 5 \to 0$. Therefore, after 12 hopping, each sequence number returns to an original location, that is, a hopping periodicity is 12. For example, in Table 4, sequence numbers of terminal devices in a terminal device set on time-frequency resources are periodic, and a periodicity length is 12.

An interleaved sequence constructed based on another interleaver (such as the golden interleaver or the row-column interleaver) usually includes a plurality of rings in a sequence number rearrangement process, and therefore a hopping periodicity is short. For example, when a network includes 12 terminal devices, an interleaved sequence generated based on a row-column interleaving method is shown in Table 9. There are four rings in total: $1 \to 4 \to 5 \to 9 \to 3 \to 1$, $2 \to 8 \to 10 \to 7 \to 6 \to 2$, $0 \to 0$, and $11 \to 11$. Therefore, a periodicity of a hopping sequence generated based on the row-column interleaving method is 5.

Table 9

| | Interleaved sequence | | | | | | | | | | | |
|---|---|---|---|---|---|---|---|---|---|---|---|---|
| Sequence number | 0 | 1 | 2 | 3 | 4 | 5 | 6 | 7 | 8 | 9 | 10 | 11 |
| Interleaved sequence number$\pi$ | 0 | 4 | 8 | 1 | 5 | 9 | 2 | 6 | 10 | 3 | 7 | 11 |

The interleaved sequence constructed based on the Sattolo shuffle algorithm forms the single ring in the sequence number rearrangement process, the hopping periodicity is long, and randomness of a signature hopping sequence is ensured. Therefore, it can be learned from FIG. 8 that a signature hopping sequence generated based on the Sattolo shuffle algorithm has good BLER performance.

A communication apparatus provided in embodiments of this application is described below.

In this application, the communication apparatus is divided into functional modules based on the foregoing method embodiments. For example, the communication apparatus may be divided into functional modules corresponding functions, or two or more functions may be integrated into one processing module. The integrated module may be implemented in a form of hardware, or may be implemented in a form of a software functional module. It should be noted that, in this application, module division is an example, and is merely a logical function division. In an actual implementation, another division manner may be used. The following describes in detail communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a processing unit 901, a sending unit 902, and a receiving unit 903.

In some embodiments of this application, the communication apparatus may be the terminal device described above. To be specific, the communication apparatus shown in FIG. 9 may be configured to perform steps, functions, or the like performed by the network device in the foregoing method embodiments. For example, the communication apparatus may be a beamformed transmit device, a chip, or the like. This is not limited in this embodiment of this application.

The processing unit 901 is configured to determine a first sequence number.

The processing unit 901 is further configured to determine, from a signature sequence set, a first signature sequence corresponding to the first sequence number.

The sending unit 902 is configured to send data on a first time-frequency resource by using the first signature sequence.

Optionally, the receiving unit 903 is further configured to receive a first message.

It may be understood that for specific descriptions of the first sequence number, the first signature sequence, the signature sequence set, the first time-frequency resource, the first message, and the like, refer to the foregoing method embodiments, such as related descriptions of the methods shown in FIG. 6 and FIG. 7. Details are not described herein again.

It may be understood that specific descriptions of the processing unit, the sending unit, and the receiving unit shown in this embodiment of this application are merely examples. For specific functions of the processing unit, the sending unit, and the receiving unit, steps performed by the processing unit, the sending unit, and the receiving unit, or the like, refer to the foregoing method embodiments. Details are not described herein again.

Still refer to FIG. 9. In some other embodiments of this application, the communication apparatus may be the network device described above. To be specific, the communication apparatus shown in FIG. 9 may be configured to perform steps, functions, or the like performed by the network device in the foregoing method embodiments. For example, the communication apparatus may be a beamformed receive device, a chip, or the like. This is not limited in this embodiment of this application.

The processing unit 901 is configured to: determine a first sequence number of a terminal device on a first time-frequency resource, and determine, from a signature sequence set, a first signature sequence corresponding to the first sequence number.

The receiving unit 903 is configured to receive data from the terminal device on the first time-frequency resource.

The processing unit 901 is further configured to decode the data based on the first signature sequence.

Optionally, the sending unit 902 is configured to send a first message.

It may be understood that for specific descriptions of the first sequence number, the first signature sequence, the signature sequence set, the first time-frequency resource, the first message, and the like, refer to the foregoing method embodiments, such as related descriptions of the methods shown in FIG. 6 and FIG. 7. Details are not described herein again.

It may be understood that specific descriptions of the receiving unit, the sending unit, and the processing unit shown in this embodiment of this application are merely examples. For specific functions of the receiving unit, the sending unit, and the processing unit, steps performed by the receiving unit, the sending unit, and the processing unit, or the like, refer to the foregoing method embodiments. Details are not described herein again.

The foregoing describes the network device and the terminal device in embodiments of this application. The following describes possible product forms of the network device and the terminal device. It should be understood that a product in any form that has a function of the network device in FIG. 9 or a product in any form that has a function of the terminal device in FIG. 9 falls within the protection scope of embodiments of this application. It should be further understood that the following descriptions are merely examples, and product forms of the network device and the terminal device in embodiments of this application are not limited thereto.

In the communication apparatus shown in FIG. 9, the processing unit 901 may be one or more processors, the sending unit 902 may be a transmitter, the receiving unit 903 may be a receiver, and the sending unit and the receiving unit are integrated into one component, for example, a transceiver. Alternatively, the processing unit 901 may be one or more processors (or the processing unit 901 may be one or more logic circuits), the sending unit 902 may be an output interface, the receiving unit 903 may be an input interface, and the input interface and the output interface may be integrated into one unit, for example, an input/output interface. Details are described below.

In a possible implementation, in the communication apparatus shown in FIG. 9, the processing unit 901 may be one or more processors, and the sending unit 902 and the receiving unit 903 are integrated into one component, for example, a transceiver. In embodiments of this application, the processor and the transceiver may be coupled, or the like. A manner of connection between the processor and the transceiver is not limited in embodiments of this application.

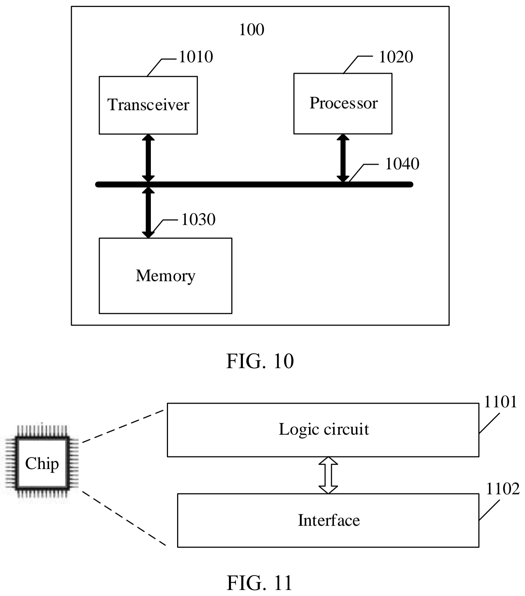

As shown in FIG. 10, a communication apparatus 100 includes one or more processors 1020 and a transceiver 1010.

For example, when the communication apparatus is configured to perform the step, the method, or the function performed by the terminal device, the processor 1020 is configured to: determine a first sequence number, and determine, from a signature sequence set, a first signature sequence corresponding to the first sequence number. The transceiver 1010 is configured to send data on the first time-frequency resource by using the first signature sequence. Optionally, the transceiver 1010 is further configured to receive a first message.

For example, when the communication apparatus is configured to perform the step, the method, or the function performed by the network device, the processor 1020 is configured to: determine a first sequence number, and determine, from a signature sequence set, a first signature sequence corresponding to the first sequence number. The transceiver 1010 is configured to receive data from the terminal device on the first time-frequency resource. The processor 1020 is further configured to decode the data based on the first signature sequence. Optionally, the transceiver 1010 is further configured to send a first message.

It may be understood that for specific descriptions of the first sequence number, the first signature sequence, the signature sequence set, the first time-frequency resource, the first message, and the like, refer to the foregoing method embodiments, such as related descriptions of the methods shown in FIG. 6 and FIG. 7. Details are not described herein again.

It may be understood that for specific descriptions of the processor and the transceiver, further refer to the descriptions of the processing unit, the sending unit, and the receiving unit shown in FIG. 9. Details are not described herein again.

In various implementations of the communication apparatus shown in FIG. 10, the transceiver may include a receiver and a transmitter. The receiver is configured to perform a receiving function (or operation) and the transmitter is configured to perform a transmitting function (or operation). The transceiver is configured to communicate with another device/apparatus through a transmission medium.

Optionally, the communication apparatus 100 may further include one or more memories 1030, configured to store program instructions and/or data. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor.

A specific connection medium between the transceiver 1010, the processor 1020, and the memory 1030 is not limited in this embodiment of this application. In this embodiment of this application, the memory 1030, the processor 1020, and the transceiver 1010 are connected through a bus 1040 in FIG. 10. The bus is represented by a thick line in FIG. 10. A manner of connection between other components is merely an example for description, and is not limited thereto. The bus may be classified into an address bus, a data bus, a control bus, and the like. For ease of representation, only one thick line is for representing the bus in FIG. 10, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like, and can implement or execute the methods, the steps, and the logical block diagrams disclosed in embodiments of this application. The general-purpose processor may be a microprocessor or any conventional processor or the like. The steps of the methods disclosed with reference to embodiments of this application may be directly performed and completed by a hardware processor, or may be performed and completed by using a combination of hardware and software modules in the processor, or the like.

In this embodiment of this application, the memory may include but is not limited to a non-volatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be configured to carry or store program code in a form of an instruction or a data structure and that can be read and/or written by a computer (for example, the communication apparatus shown in this application), but is not limited thereto. The memory in this embodiment of this application may alternatively be a circuit or any other apparatus that can implement a storage function, and is configured to store the program instructions and/or the data.

The processor 1020 is mainly configured to process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to: convert a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1020 may read the software program in the memory 1030, interpret and execute instructions of the software program, and process data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When the data is sent to the communication apparatus, the radio frequency circuit receives the radio frequency signal through the antenna, converts the radio frequency signal into a baseband signal, and outputs the baseband signal to the processor 1020. The processor 1020 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may further have more components and the like than those shown in FIG. 10. This is not limited in this embodiment of this application. The methods performed by the processor and the transceiver are merely examples. For specific steps performed by the processor and the transceiver, refer to the methods described above.

In another possible implementation, in the communication apparatus shown in FIG. 9, the processing unit 901 may be one or more logic circuits, the sending unit 902 may be an output interface, the receiving unit 903 may be an input interface, and the input interface and the output interface may be integrated into one unit, for example, an input/output interface. The input/output interface is also referred to as a communication interface, an interface circuit, an interface, or the like. As shown in FIG. 11, a communication apparatus shown in FIG. 11 includes a logic circuit 1101 and an interface 1102. To be specific, the processing unit 901 may be implemented through the logic circuit 1101, and the sending unit 902 and the receiving unit 903 may be implemented through the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 is an example in which the communication apparatus is a chip. The chip includes the logic circuit 1101 and the interface 1102.

In this embodiment of this application, the logic circuit and the interface may alternatively be coupled to each other. A specific manner of connection between the logic circuit and the interface is not limited in this embodiment of this application.

For example, when the communication apparatus is configured to perform the method, the function, or the step performed by the terminal device, the logic circuit 1101 is configured to: determine a first sequence number, and determine, from a signature sequence set, a first signature sequence corresponding to the first sequence number. The interface 1102 is configured to send data on a first time-frequency resource by using the first signature sequence. Optionally, the interface 1102 is further configured to input a first message.

For example, when the communication apparatus is configured to perform the method, the function, or the step performed by the network device, the logic circuit 1101 is configured to: determine a first sequence number, determine, from a signature sequence set, a first signature sequence corresponding to the first sequence number, and decode data based on the first signature sequence. The interface 1102 is configured to input the data. Optionally, the interface 1102 is further configured to output a first message.

It may be understood that the communication apparatus shown in this embodiment of this application may implement the methods provided in embodiments of this application in a form of hardware, or may implement the methods provided in embodiments of this application in a form of software. This is not limited in this embodiment of this application.

For specific descriptions of the first sequence number, the first signature sequence, the signature sequence set, the first time-frequency resource, the first message, and the like, refer to the foregoing method embodiments, such as related descriptions of the methods shown in FIG. 6 and FIG. 7. Details are not described herein again.

For specific implementations of embodiments shown in FIG. 11, further refer to the foregoing embodiments. Details are not described herein again.

An embodiment of this application further provides a communication system. The communication system includes a network device and a terminal device. The network device and the terminal device may be configured to perform the method in any one of the foregoing embodiments (as shown in FIG. 6, FIG. 7, and the like).

In addition, this application further provides a computer program. The computer program is used to implement an operation and/or processing performed by the network device in the method provided in this application.

This application further provides a computer program. The computer program is used to implement an operation and/or processing performed by the terminal device in the method provided in this application.

This application further provides a computer-readable storage medium. The computer-readable storage medium stores computer code. When the computer code is run on a computer, the computer is enabled to perform an operation and/or processing performed by the network device in the method provided in this application.

This application further provides a computer-readable storage medium. The computer-readable storage medium stores computer code. When the computer code is run on a computer, the computer is enabled to perform an operation and/or processing performed by the terminal device in the method provided in this application.

This application further provides a computer program product. The computer program product includes computer code or a computer program. When the computer code or the computer program is run on a computer, an operation and/or processing performed by the network device in the method provided in this application are/is performed.

This application further provides a computer program product. The computer program product includes computer code or a computer program. When the computer code or the computer program is run on a computer, an operation and/or processing performed by the terminal device in the method provided in this application are/is performed.

An embodiment of this application further provides a chip or a chip system, including a processor, configured to perform the method in any one of the foregoing embodiments (as shown in FIG. 6, FIG. 7, and the like).

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:

    determining a first sequence number of a terminal device on a first time-frequency resource;
    determining, from a signature sequence set, a first signature sequence corresponding to the first sequence number, wherein a difference between quantities of sequence numbers corresponding to any two signature sequences in the signature sequence set is less than or equal to a first value, and sequence numbers corresponding to any two signature sequences in the signature sequence set are different; and
    sending data on the first time-frequency resource by using the first signature sequence.

2. A data transmission method, comprising:

    determining a first sequence number of a terminal device on a first time-frequency resource;
    determining, from a signature sequence set, a first signature sequence corresponding to the first sequence number, wherein a difference between quantities of sequence numbers corresponding to any two signature sequences in the signature sequence set is less than or equal to a first value, and sequence numbers corresponding to any two signature sequences in the signature sequence set are different;
    receiving data from the terminal device on the first time-frequency resource; and
    decoding the data based on the first signature sequence.

3. The method according to claim 1 or 2, wherein the terminal device is comprised in a terminal device set, a terminal device in the terminal device set transmits data on the first time-frequency resource, and sequence numbers of any two terminal devices in the terminal device set on the first time-frequency resource are different.

4. The method according to any one of claims 1 to 3, wherein determining, from the signature sequence set, the first signature sequence corresponding to the first sequence number comprises:
    determining a second sequence number based on the first sequence number, wherein the second sequence number is a sequence number of the first signature sequence in the signature sequence set.

5. The method according to claim 4, wherein the first sequence number and the second sequence number satisfy either of the following:

    Sn=floor(S1/Np)+1, and Np=ceil(N/Ns), wherein Sn is the second sequence number, floor is rounding down, S1 is the first sequence number, ceil is rounding up, N is a quantity of terminal devices, and Ns is a quantity of signature sequences in the signature sequence set; or
    Sn=mod(S1, Ns)+1, wherein Sn is the second sequence number, mod is a modulo operation, S1 is the first sequence number, and Ns is a quantity of signature sequences in the signature sequence set.

6. The method according to any one of claims 3 to 5, wherein determining the first sequence number of the terminal device on the first time-frequency resource comprises:
    determining the first sequence number based on at least one of a random algorithm, the quantity of terminal devices in the terminal device set, and a third sequence number, wherein the third sequence number is a sequence number of the terminal device on a second time-frequency resource, the terminal device in the terminal device set transmits data on the second time-frequency resource, and the second time-frequency resource is different from the first time-frequency resource.

7. The method according to claim 6, wherein the first time-frequency resource and the second time-frequency resource are continuous in time domain or frequency domain.

8. The method according to claim 6 or 7, wherein determining the first sequence number based on at least one of the random algorithm, the quantity of terminal devices in the terminal device set, and the third sequence number comprises:

   generating a first random sequence based on the random algorithm and the quantity of terminal devices, wherein a length of the first random sequence is greater than or equal to the quantity of terminal devices; and
   determining the first sequence number based on a second random sequence and the third sequence number, wherein the second random sequence is determined based on the first random sequence.

9. The method according to claim 8, wherein the second random sequence is an inverse sequence of the first random sequence, and the first random sequence and the second random sequence satisfy the following formula: $\pi^{-1}(\pi(a)) = a$, wherein $\pi$ is the first random sequence, $\pi^{-1}$ is the second random sequence, $a$ is a positive integer less than or equal to N1, N1 is the length of the first random sequence, and N is a positive integer.

10. The method according to claim 8 or 9, wherein the first sequence number satisfies the following formula: $S1=\pi^{-1}(S2)$, wherein $\pi^{-1}$ is the second random sequence, S1 is the first sequence number, and S2 is the third sequence number.

11. The method according to any one of claims 8 to 10, wherein the random algorithm comprises at least one of a Fisher-Yates shuffle algorithm, a Sattolo shuffle algorithm, an S-random interleaver, a Welch-Costas interleaver, a golden interleaver, and a multidimensional interleaver.

12. The method according to claim 6 or 7, wherein determining the first sequence number based on at least one of the random algorithm, the quantity of terminal devices in the terminal device set, and the third sequence number comprises:
    determining the first sequence number based on the random algorithm, the quantity of terminal devices, the third sequence number, and the quantity of signature sequences in the signature sequence set.

13. The method according to claim 12, wherein the random algorithm comprises a row-column interleaver, and the first sequence number, the third sequence number, the quantity of terminal devices, and the quantity of signature sequences satisfy the following formulas:
    S2=Ns*a+b, and S1=N/Ns*b+a, wherein S2 is the third sequence number, Ns is the quantity of signature sequences in the signature sequence set, a is a quotient of S2 divided by Ns, b is a remainder of S2 divided by Ns, S1 is the first sequence number, and N is the quantity of terminal devices.

14. The method according to claim 6, wherein the terminal device set transmits data on a time-frequency resource set, the time-frequency resource set comprises the first time-frequency resource and the second time-frequency resource, and determining the first sequence number based on at least one of the random algorithm, the quantity of terminal devices in the terminal device set, and the third sequence number comprises:
    determining the first sequence number based on the random algorithm, the quantity of terminal devices, the third sequence number, and a fourth sequence number, wherein the fourth sequence number is a sequence number of the first time-frequency resource in the time-frequency resource set.

15. The method according to claim 14, wherein the random algorithm comprises a row-column interleaver, and the first sequence number, the quantity of terminal devices, the third sequence number, and the fourth sequence number satisfy the following formulas:

$$c = \mathrm{ceil}(S2/t); \; d = \mathrm{mod}(S2-1, t) + 1; \; NR = \mathrm{mod}(N-1, t) + 1;$$

and

$$S1 = \begin{cases} \text{ceil}(N/t) * (d-1) + c, & d \leq NR + 1 \\ [\text{ceil}(N/t)-1] * (d-1) + NR + c, & d > NR + 1 \end{cases}'$$

wherein
S2 is the third sequence number, t is the fourth sequence number, S1 is the first sequence number, ceil is rounding up, N is the quantity of terminal devices, mod is a modulo operation, and Ns is the quantity of signature sequences in the signature sequence set.

16. The method according to claim 6 or 7, wherein the random algorithm comprises a linear congruential interleaver, the first sequence number, the third sequence number, and the quantity of terminal devices satisfy the following formula: S1=mod(S2*p+s, N), wherein S1 is the first sequence number, S2 is the third sequence number, mod is a modulo operation, N is the quantity of terminal devices, p and N are relatively prime, and s is any positive integer.

17. The method according to claim 1, wherein the method further comprises:
receiving a first message, wherein the first message indicates the signature sequence set.

18. The method according to claim 2, wherein the method further comprises:
sending a first message, wherein the first message indicates the signature sequence set.

19. A communication apparatus, comprising a unit configured to perform the method according to any one of claims 1 to 18.

20. A communication apparatus, comprising a processor and a memory, wherein

the memory is configured to store instructions; and
the processor is configured to execute the instructions, so that the method according to any one of claims 1 to 18 is performed.

21. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 18 is performed.

22. A computer-readable storage medium, wherein the computer-readable storage medium is configured to store a computer program, and when the computer program is executed, the method according to any one of claims 1 to 18 is performed.

23. A communication system, wherein the communication system comprises a first communication apparatus and a second communication apparatus, the first communication apparatus is configured to perform the method according to any one of claim 1 or claims 3 to 18, and the second communication apparatus is configured to perform the method according to any one of claims 2 to 18.

FIG. 1

FIG. 2

FIG. 3

FIG. 4

Signature sequence pattern resource pool

S1    S2    S3    S4    S5    S6

| | Time-frequency resource 1 | Time-frequency resource 2 | Time-frequency resource 3 | Time-frequency resource 4 |
|---|---|---|---|---|
| UE 1 | S3 | S4 | S6 | S1 |
| UE 2 | S5 | S2 | S2 | S3 |

## FIG. 5

Terminal device

Network device

Determine a first sequence number of the terminal device on a first time-frequency resource — 601

Determine a first sequence number of the terminal device on a first time-frequency resource — 603

Determine, from a signature sequence set, a first signature sequence corresponding to the first sequence number — 602

Determine, from a signature sequence set, a first signature sequence corresponding to the first sequence number — 604

Send data on the first time-frequency resource by using the first signature sequence — 605

Decode the data based on the first signature sequence — 606

## FIG. 6

Terminal device

Network device

First message / 701

Determine a first sequence number based on at least one of a random algorithm, a quantity of terminal devices in a terminal device set, and a third sequence number / 702

Determine, from a signature sequence set, a first signature sequence corresponding to the first sequence number / 703

Determine, based on at least one of the random algorithm, the quantity of terminal devices in the terminal device set, and the third sequence number, the first sequence number and the first signature sequence corresponding to the first sequence number / 704

Send data on a first time-frequency resource by using the first signature sequence / 705

FIG. 7

**FIG. 8**

**FIG. 9**

FIG. 10

FIG. 11

## INTERNATIONAL SEARCH REPORT

| International application No. |
|---|
| **PCT/CN2024/071058** |

**A.    CLASSIFICATION OF SUBJECT MATTER**

H04W 12/106(2021.01)i

According to International Patent Classification (IPC) or to both national classification and IPC

**B.    FIELDS SEARCHED**

Minimum documentation searched (classification system followed by classification symbols)

IPC:H04L, H04W, H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, 3GPP, CNKI, IEEE: 时频资源 序号 签名 time frequency resource serial number signature NOMA

**C.    DOCUMENTS CONSIDERED TO BE RELEVANT**

| Category* | Citation of document, with indication, where appropriate, of the relevant passages | Relevant to claim No. |
|---|---|---|
| A | CN 108347774 A (HUAWEI TECHNOLOGIES CO., LTD.) 31 July 2018 (2018-07-31) abstract | 1-23 |
| A | CN 106535354 A (SPREADTRUM COMMUNICATIONS (SHANGHAI) CO., LTD.) 22 March 2017 (2017-03-22) entire document | 1-23 |
| A | WO 2016101107 A1 (HUAWEI TECHNOLOGIES CO., LTD.) 30 June 2016 (2016-06-30) entire document | 1-23 |
| A | WO 2020155189 A1 (HUAWEI TECHNOLOGIES CO., LTD.) 06 August 2020 (2020-08-06) entire document | 1-23 |
| A | MCC. "Final Report of 3GPP TSG RAN WG1 #95 v1.0.0" *3GPP TSG RAN WG1 Meeting #96 R1-1901482*, 01 March 2019 (2019-03-01), entire document | 1-23 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **15 March 2024** | **20 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 108347774 | A | 31 July 2018 | EP | 3565348 | A1 | 06 November 2019 |
| | | | | JP | 2020507260 | A | 05 March 2020 |
| | | | | US | 2019342121 | A1 | 07 November 2019 |
| | | | | WO | 2018137510 | A1 | 02 August 2018 |
| CN | 106535354 | A | 22 March 2017 | | None | | |
| WO | 2016101107 | A1 | 30 June 2016 | US | 2017288928 | A1 | 05 October 2017 |
| | | | | EP | 3226636 | A1 | 04 October 2017 |
| | | | | CN | 107079466 | A | 18 August 2017 |
| WO | 2020155189 | A1 | 06 August 2020 | EP | 3911054 | A1 | 17 November 2021 |
| | | | | US | 2021359822 | A1 | 18 November 2021 |
| | | | | CN | 113366896 | A | 07 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310027172